(19) Europäisches Patentamt / European Patent Office / Office européen des brevets

(11) **EP 2 342 073 B1**

(12) **FASCICULE DE BREVET EUROPEEN**

(45) Date de publication et mention
de la délivrance du brevet:
**23.11.2016 Bulletin 2016/47**

(21) Numéro de dépôt: **09760204.9**

(22) Date de dépôt: **23.10.2009**

(51) Int Cl.:
*B32B 5/26* *(2006.01)*    *B32B 5/28* *(2006.01)*
*B29C 70/42* *(2006.01)*    *B29C 70/08* *(2006.01)*
*B29C 70/54* *(2006.01)*

(86) Numéro de dépôt international:
**PCT/FR2009/052039**

(87) Numéro de publication internationale:
**WO 2010/046609 (29.04.2010 Gazette 2010/17)**

(54) **NOUVEAUX MATERIAUX DE RENFORT, ADAPTES A LA CONSTITUTION DE PIECES COMPOSITES**

NEUARTIGES VERSTÄRKUNGSMATERIAL, DAS ZUR HERSTELLUNG VON VERBUNDWERKSTOFFEN GEEIGNET IST

NOVEL REINFORCING MATERIAL ADAPTED TO FORMATION OF COMPOSITE ARTICLES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.10.2008  FR 0857214**
            **06.02.2009  FR 0950759**

(43) Date de publication de la demande:
**13.07.2011  Bulletin 2011/28**

(73) Titulaire: **Hexcel Reinforcements**
**01120 Dagneux (FR)**

(72) Inventeurs:
• **BERAUD, Jean-Marc**
  **F-38140 Rives (FR)**
• **LAMETHE, Jean-Florent**
  **F-31000 Toulouse (FR)**
• **MINNI, Jean-Christophe**
  **F-74450 Le Grand Bornand (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A- 1 473 132        EP-A1- 1 731 282
GB-A- 2 237 583        US-A1- 2003 008 125
US-A1- 2006 154 545    US-B1- 6 503 856**

**Description**

La présente invention concerne le domaine technique des matériaux de renfort, adaptés à la constitution de pièces composites. Plus précisément, l'invention concerne un nouveau matériau intermédiaire comportant une nappe unidirectionnelle pour la réalisation de pièces composites, par injection ou infusion ultérieure de résine thermodurcissable, les empilements multiaxiaux de tels matériaux, un procédé de fabrication de pièces composites à partir d'un empilement d'un tel matériau, ainsi que les pièces composites obtenues.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais « Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Or, les propriétés mécaniques des pièces sont principalement liées à un paramètre qui est le taux volumique de fibres (TVF).

Dans ces secteurs, un grand nombre de préformes sont réalisées à base de matériau de renfort, principalement en fibres de carbone, notamment du type unidirectionnel. Le document EP 1731282 décrit une préforme formée avec une pluralité de substrats de fibres de renfort, empilés les uns sur les autres, chacun réalisé avec au moins des fils fibreux de renfort, qui comporte un matériau en résine dont le composant principal est une résine thermoplastique et est stratifié entre les couches desdits substrats de fibres de renfort dans ladite préforme, ainsi qu'un FRP (plastique renforcé en fibres) moulé à partir de ladite préforme et les procédés permettant de les obtenir. Ladite préforme comprend des trous de passage qui s'étendent à travers une pluralité de substrats de fibres de renfort dans la direction de l'épaisseur de ladite préforme.

Il est possible de calculer de manière théorique le taux volumique maximal de fibres contenues dans une nappe unidirectionnelle en supposant deux types d'arrangements : hexagonal ou carré. En supposant respectivement un arrangement de type hexagonal et un arrangement de type carré, le TVF maximum obtenu est respectivement de 90,7 % et de 78,5 % (An Introduction to Composite Materials, D. Hull, T.W. Clyne, Second Edition, Cambridge Solid State Science Series, 1996). En revanche dans la réalité, il semble difficile d'obtenir des fractions volumiques de fibres supérieures à 70% pour des pièces composites. Dans la pratique, il est communément admis, par l'homme de métier, qu'un taux volumique de fibres (TVF) d'environ 60 % est un standard pour la réalisation de pièces composites satisfaisantes et ce, avec une bonne reproductibilité (S. T. Peters, « Introduction, composite basics and road map », in Handbook of Composites, Chapman & Hall, 1998, p. 1- 20 et en particulier p. 8).

La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à un voile de fibres thermoplastiques. De telles solutions sont notamment décrites dans les demandes de brevet ou les brevets EP1125728, US 628016, WO 2007/015706, WO 2006/121961 et US 6,503,856. L'ajout de ce voile permet d'améliorer les propriétés mécaniques au test de compression après impact (CAI), test utilisé de manière courante pour caractériser la résistance des structures à l'impact.

Le document US 2006/0154545 décrit une telle solution dans le cas d'un tissu unidirectionnel, mais, qui compte tenues des caractéristiques du matériau décrit, ne permet pas d'obtenir un TVF satisfaisant.

Quelques détails sur ces solutions antérieures dans le cadre des unidirectionnels sont donnés ci-après. La demande de brevet EP1125728 au nom de Toray Industries Inc. décrit un matériau de renfort associant une feuille de fibres de renfort à un non-tissé de fibres courtes. Le non-tissé est laminé sur au moins une face de la feuille de renfort, de manière que les fibres constituant le non-tissé passent au travers des fibres de renforts (en carbone) de la feuille et sont donc intégrées dans les fibres de renforts. Le non-tissé est constitué d'un mélange de fibres à bas point de fusion et de fibres à haut point de fusion. Il est important de noter que tous les exemples cités utilisent un seul non-tissé associé sur une seule face de la feuille de fibres de renfort constituée d'un tissu ou d'une nappe unidirectionnelle, conduisant à un matériau de renfort non symétrique. L'exemple 4 utilise une feuille de fibres de renfort constitué d'un tissu unidirectionnel de 300 g/m$^2$. L'épaisseur du non-tissé utilisé n'est pas indiquée, mais est certainement assez élevée, compte tenu de sa masse surfacique (8 g/m$^2$) et du taux de vide de 90% indiqué. L'empilement utilisé est de type [-45/0/+45/90]$_{2s}$, soit 7 interplis contenant un seul non-tissé. Si l'enseignement de ce document est appliqué à une nappe de fibres de carbone de masse surfacique plus faible, 134 g/m$^2$ par exemple, l'association à un même type de voile, mais ce de chaque côté pour obtenir un matériau symétrique, conduirait à un taux volumique de fibres très faible, non compatible avec la réalisation de structures primaires pour l'aéronautique.

La demande de brevet WO 2007/015706 au nom de The Boeing Company décrit une méthode pour la fabrication de préformes combinant un assemblage cousu alternant des couches de fibres de carbone et des couches de non-tissés pour augmenter la résistance à l'impact des structures composites. Les non-tissés sont disposés à chaque interpli et non de chaque côté des couches de fibres de carbone. Cette demande de brevet ne mentionne pas de gamme de masse surfacique pour les couches de carbone, ni de gamme d'épaisseurs pour les non-tissés. Les exemples mentionnent l'utilisation de trois non-tissés différents dont seules les masses surfaciques de 4,25 g/m$^2$ (0.125 oz/yd$^2$ avec les unités de mesures américaines), 8,5 g/m$^2$ (0.25 oz/yd$^2$), 12,7 g/m$^2$ (0.375 oz/yd$^2$) sont précisées. Aucune indication n'est donnée sur l'épaisseur de ces produits. L'un des voiles à base de copolyester a même un effet négatif sur les propriétés de résistance à l'impact. Les exemples indiquent l'épaisseur des panneaux réalisés, la masse surfacique des couches de carbone (190 g/m$^2$) et le type de fibres de carbone (T700 ayant une masse volumique de 1780 kg/m$^3$). Les épaisseurs varient de 0,177 à 0,187 inch (soit 4,5 à 4,75 mm) pour les panneaux présentant les meilleurs résultats de contrainte à la rupture en compression après impact (CAI). A partir de ces épaisseurs et des informations sur le type de fibres et la masse surfacique des plis de carbone, il est possible d'évaluer le TVF des panneaux qui varient entre 54 et 57%, taux inférieur à celui généralement pris en considération par l'homme du métier pour la réalisation de pièces primaires. Le meilleur résultat de CAI (39,6 ksi ou 273 MPa) est obtenu pour un TVF de 54%.

Dans la demande de brevet WO 2006/121961, un non-tissé constitué de fibres solubles (dans des résines de type époxydes par exemple) est intercalé à chaque interpli de couche de fibres de carbone lors de la réalisation de la préforme. Le non-tissé n'est pas associé directement à la couche de carbone. L'exemple présenté utilise un tissu de fibres de carbone d'une masse surfacique de 370 g/m$^2$ avec un non tissé de 60 g/m$^2$. La plaque réalisée permet d'obtenir un TVF seulement de 55%. Par ailleurs, le manque de précision sur le test de compression après impact (CAI) (absence de précision de l'énergie à laquelle a été réalisé l'impact) ne permet pas de déduire les performances mécaniques de la valeur mesurée indiquée.

Le brevet US 6,503,856 mentionne l'utilisation d'une couche de carbone sur laquelle deux couches adhésives sous forme de voile sont superposées sur au moins un côte de la couche de carbone. Ce brevet n'indique pas les épaisseurs des couches adhésives (seulement les diamètres des fibres des deux couches) et la masse surfacique de carbone préférée est comprise entre 200 et 1000 g/m$^2$. Les générateurs électriques (batteries, piles à combustible) sont l'application visée pour ce type de produit et l'intérêt d'un tel produit n'est pas mis en évidence.

Par conséquent, il apparaît que, dans les techniques de l'art antérieur, l'ajout d'un voile se fait, le plus souvent au détriment d'autres propriétés mécaniques. En effet, comme mentionné précédemment, les propriétés mécaniques sont principalement pilotées par le taux volumique de fibres (TVF) et les techniques décrites dans l'art antérieur ne permettent notamment pas d'obtenir des pièces composites qui présentent un TVF de l'ordre de 60%.

Aussi, un des objectifs de la présente invention est de proposer un nouveau produit intermédiaire, adapté à la réalisation de pièces composites à base de résine thermodurcissable, et notamment par injection ou infusion de résine, qui permette de réaliser des pièces composites à taux volumique de fibres de l'ordre de 60% et aux propriétés mécaniques satisfaisantes, pour répondre à certains cahiers des charges très stricts, imposés par exemple dans le domaine de l'aéronautique.

Un autre objectif de l'invention est de remplir ce cahier des charges, tout en proposant un produit intermédiaire symétrique qui soit plus facile à mettre en oeuvre et plus adapté à des procédés automatisés.

Dans ce contexte, l'invention concerne un nouveau matériau intermédiaire pour la réalisation de pièces composites, par injection ou infusion ultérieure de résine thermodurcissable, constituée d'une nappe unidirectionnelle de fibres de carbone présentant une masse surfacique de 100 à 280 g/m$^2$, associée, sur chacune de ses faces, à un voile de fibres thermoplastiques présentant une épaisseur de 0,5 à 50 microns, le produit intermédiaire selon l'invention présentant une épaisseur totale comprise dans la gamme allant de 80 à 380 microns, de préférence dans la gamme allant de 90 à 320 microns.

La présente invention a également pour objet un procédé de fabrication d'un tel matériau intermédiaire dans lequel une nappe unidirectionnelle de fibres de carbone présentant une masse surfacique de 100 à 280 g/m$^2$, est associée, sur chacune de ses faces, à un voile de fibres thermoplastiques, lesdits voiles présentant, chacun, une épaisseur de 0,5 à 50 microns, de préférence de 3 à 35 microns, par une étape de fusion/refroidissement des voiles, de manière à ce que le matériau intermédiaire présente une épaisseur totale de 80 à 380 microns, de préférence de 90 à 320 microns.

Selon un autre de ses aspects, l'invention concerne un empilement de matériaux intermédiaires conformes à l'invention solidarisés entre eux au sein de l'empilement. Selon un mode de réalisation préféré, un tel empilement n'est pas solidarisé par couture, ni par tricotage, mais par une soudure réalisée par une opération de chauffage/refroidissement du voile.

La présente invention a également pour objet un procédé de fabrication d'une pièce composite comportant les étapes suivantes :

a) disposer d'un empilement de matériaux intermédiaires selon l'invention,

b) éventuellement solidariser l'empilement obtenu sous la forme d'une préforme,

c) ajouter, par infusion ou injection, une résine thermodurcissable,

d) consolider la pièce souhaitée par une étape de traitement thermique sous pression, suivi d'un refroidissement,

ainsi que les pièces composites obtenues qui présentent notamment un taux volumique de fibres (TVF) de 57 à 63%, de préférence de 59 à 61%. Selon un mode de mise en oeuvre particulier du procédé selon l'invention, la résine thermodurcissable est ajoutée par infusion sous une pression inférieure à la pression atmosphérique, notamment à une pression inférieure à 100 kPa (1 bar) et, par exemple, comprise entre 10 kPa (0,1 bar) et 100 kPa (1 bar).

Le matériau intermédiaire et le procédé selon l'invention permettent de réaliser des pièces composites présentant un TVF de l'ordre de 60%, qui correspond au taux standard pour les structures primaires en aéronautique (c'est-à-dire les pièces vitales pour l'appareil) et, également, d'améliorer fortement la résistance à l'impact à faible vitesse des pièces composites obtenues: par exemple, la chute d'un outil dans un atelier lors de la fabrication d'une structure composite, un choc avec un corps étranger lors de son utilisation en fonctionnement.

La pression appliquée lors d'un procédé par injection est supérieure à celle utilisée lors d'un procédé par infusion. Il en résulte qu'il est plus facile de réaliser des pièces avec un TVF correct avec un procédé d'injection que d'infusion. Les matériaux selon l'invention permettent d'atteindre le taux volumique de fibres souhaité, et notamment de l'ordre de 60%, même lorsque la pièce composite est réalisée avec une étape c) qui met en oeuvre une infusion et non une injection de résine. Un tel mode de réalisation constitue d'ailleurs une variante avantageuse.

Les pièces composites susceptibles d'être obtenues selon le procédé de l'invention font également parties intégrantes de l'invention, en particulier, les pièces qui présentent un taux volumique de fibres de 57 à 63% et notamment de 59 à 61%.

La description qui suit, en référence aux figures annexées, permet de mieux comprendre l'invention.

La **Figure 1** représente de façon schématique une vue en coupe d'un matériau intermédiaire conforme à l'invention.

La **Figure 2** donne un schéma de principe d'une machine de fabrication d'un matériau intermédiaire conforme à l'invention.

Les **Figures 3A** et **3B** représentent un dispositif pour mesurer l'épaisseur d'une préforme sous vide.

Les **Figures 4A** et **4B** sont des vues schématiques de dessus d'un matériau intermédiaire selon l'invention, dans lequel des perforations ont été réalisées.

La **Figure 5** est une vue en perspective d'un exemple de moyen de perforation.

La **Figure 6** est une vue partielle d'un dispositif intégrant une série de moyens de perforation en ligne.

Les **Figures 7** à **10** sont des coupes microscopiques de produits intermédiaires constitués d'une nappe unidirectionnelle associée sur chacune de leurs grandes faces à un voile (non tissé).

Les **Figures 11** à **14** sont des photographies de dessus d'empilements soudés et perforés conformes à l'invention, la **Figure 15** étant une photographie de dessus d'un produit intermédiaire perforé conforme à l'invention.

La **Figure 16** compare les valeurs de perméabilité en fonction du taux volumiques de fibre obtenue dans plusieurs configurations.

La **Figure 17** présente des résultats d'essais mécaniques.

Par « nappe unidirectionnelle de fibres de carbone », on entend une nappe constituée exclusivement ou quasi-exclusivement de fibres de carbone déposées parallèlement les unes aux autres. Il peut être prévu la présence de fils de liage du type thermoplastique, notamment, en polyamides, copolyamides, polyesters, copolyesters, copolyamides block ester/éther, polyacétales, polyoléfines, polyuréthannes thermoplastiques, phénoxy, pour faciliter la manipulation, si besoin de la nappe, avant son association avec les voiles de fibres thermoplastiques. Ces fils de liage s'étendront le plus souvent transversalement aux fibres de carbone. Le terme « nappe unidirectionnelle » inclut aussi les tissus unidirectionnels, dans lesquels des fils de trame espacés viennent croiser avec entrelacement les fibres de carbone qui s'étendent parallèlement les unes aux autres et constituent les fils de chaine du tissu unidirectionnel. Même dans ces différents cas, où de tels fils de liage, de couture ou de trame sont présents, les fibres de carbone parallèles les unes aux autres représenteront au moins 95% en masse de la nappe, qui est donc qualifiée d'« unidirectionnelle ». Néanmoins, selon un mode de réalisation particulier de l'invention, la nappe unidirectionnelle ne comporte aucun fil de trame venant entrelacer les fibres de carbone, de manière à éviter toute ondulation. En particulier, le matériau intermédiaire selon l'invention ne comporte ni tissage, ni couture, ni tricotage. Dans la nappe unidirectionnelle, les fils de carbone sont, de préférence, non associés à un liant polymérique et donc qualifiés de secs, c'est-à-dire qu'ils ne sont ni imprégnés, ni enduits, ni associés à un quelconque liant polymérique avant leur association aux voiles thermoplastiques. Les fibres de carbone sont, néanmoins, le plus souvent caractérisées par un taux massique d'ensimage standard pouvant représenter au plus 2% de leur masse.

Dans le cadre de l'invention, la nappe de fibres de carbone constituant l'âme du matériau intermédiaire présente un grammage compris entre 100 et 280 g/m$^2$. Cette gamme de grammage permet, de manière aisée, aux ingénieurs des bureaux d'étude de dimensionner correctement les structures composites en adaptant les séquences d'empilement des différentes couches, en fonction des différents modes de sollicitations mécaniques des structures composites. Un grammage de carbone d'une couche élémentaire plus faible offrira d'autant plus de versatilité dans le choix des différents empilements possibles à épaisseur constante.

Le grammage de la nappe unidirectionnelle, au sein du matériau intermédiaire correspond à celle de la nappe unidirectionnelle avant son association avec les voiles, mais il n'est pas possible de mesurer le grammage de la nappe unidirectionnelle avant son association avec les voiles car les fils n'ont aucune cohésion entre eux. Le grammage de la nappe de fibres de carbone peut être déterminé à partir du grammage du matériau intermédiaire (nappe unidirectionnelle + 2 voiles). Si l'on connait la masse surfacique des voiles, il est alors possible de déduire la masse surfacique de la nappe unidirectionnelle. De façon avantageuse, la masse surfacique est déterminée à partir du produit intermédiaire par attaque chimique (éventuellement également par pyrolyse) du voile. Ce type de méthode est classiquement utilisé par l'homme du métier pour déterminer le taux de fibres de carbone d'un tissu ou d'une structure composite.

On décrit ci-après une méthode de mesure du grammage du matériau intermédiaire. Le grammage du matériau intermédiaire est mesuré par pesée d'échantillons découpés de 100 cm$^2$ (c'est-à-dire de 113 mm de diamètre). Pour faciliter la découpe des échantillons de matériau intermédiaire qui est souple, le matériau intermédiaire est placé entre deux cartons lustrés de la société Cartonnage Roset (Saint Julien en Genevois, France) de 447 g/m$^2$ et de 0,450 mm d'épaisseur pour assurer une certaine rigidité de l'ensemble. Un emporte pièce circulaire pneumatique de la société Novi Profibre (Eybens, France) est utilisé pour découper l'ensemble ; 10 échantillons sont prélevés par type de produit intermédiaire fabriqué.

Dans la nappe unidirectionnelle, les fibres de carbone, se trouvent le plus souvent sous la forme de fils d'au moins 1000 filaments, et notamment de 3000 à 50 000 filaments, par exemple de 3K, 6K, 12K ou 24K. Les fils de carbone ont un titre compris entre 60 et 3800 Tex, et préférentiellement entre 400 et 900 tex. Les épaisseurs de la nappe unidirectionnelle de carbone varient entre 90 et 270 μm.

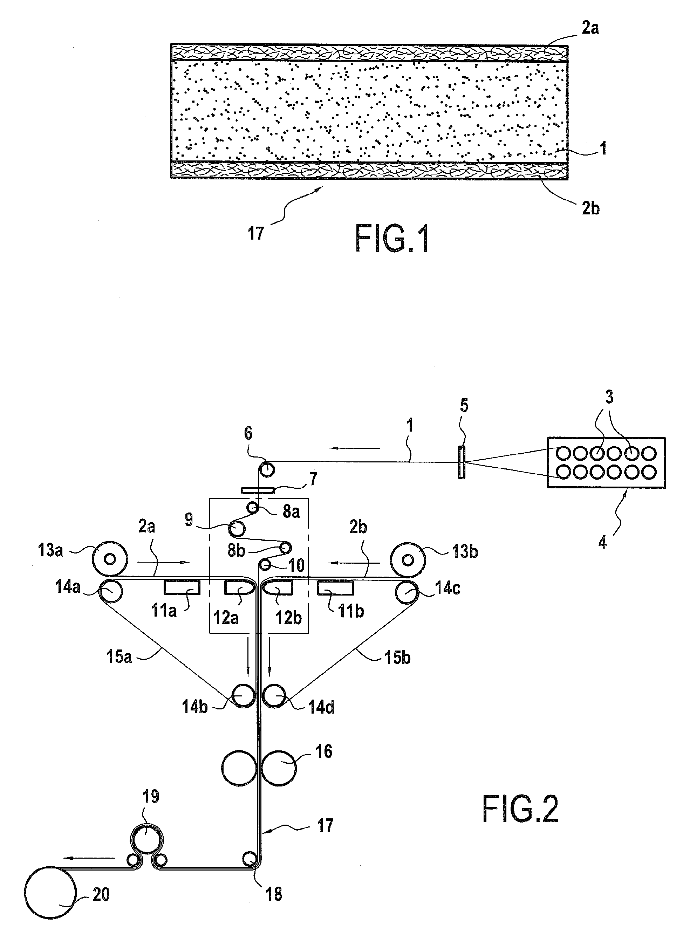

La nappe unidirectionnelle est associée, sur chacune de ses faces, à un voile de fibres thermoplastiques, pour conduire à un produit intermédiaire tel que schématisé **Figure 1**. L'utilisation d'un produit intermédiaire symétrique permet d'éviter toute erreur d'empilement, lors de sa dépose manuelle ou automatique pour la constitution de pièces composites, et donc de limiter la génération de zones fragiles, notamment d'un interpli sans voile.

Par « voile », on entend un non-tissé de fibres continues ou courtes. En particulier, les fibres constitutives du non-tissé présenteront des diamètres moyens compris dans la gamme allant de 0,5 et 70 μm. Dans le cas d'un non tissé de fibres courtes, les fibres présenteront, par exemple, une longueur comprise entre 1 et 100 mm.

Dans le cadre de l'invention, les fibres constitutives du voile sont, avantageusement, constituées d'un matériau thermoplastique, notamment choisi parmi : les Polyamides (PA : PA6, PA12, PA11, PA6,6, PA 6,10, PA 6,12, ...), Copolyamides (CoPA), les Polyamides - block ether ou ester (PEBAX, PEBA), polyphtalamide (PPA), les Polyesters (Polyéthylène téréphtalate -PET-, Polybutylène téréphtalate - PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phenoxys, les copolymères à blocs tels que les copolymères Styrène-Butadiene-Méthylméthacrylate(SBM), les copolymères Méthylméthacrylate-Acrylate de Butyl-Méthylméthacrylate (MAM) ou un mélange de fibres constituées de ces matériaux thermoplastiques. La matière est bien entendue adaptée aux différents types de systèmes thermodurcissables utilisés pour la constitution de la matrice, lors de la réalisation ultérieure des pièces composites.

L'épaisseur des voiles avant leur association à la nappe unidirectionnelle sera choisie, en fonction de la façon dont ils vont être associés à la nappe de fibres de carbone. Le plus souvent, leur épaisseur sera très proche de l'épaisseur souhaitée sur le produit intermédiaire. Il peut également être possible de choisir d'utiliser un voile d'épaisseur plus importante qui sera laminé sous température lors de l'étape d'association, de manière à atteindre l'épaisseur voulue. De façon préférée, la nappe de carbone est associée sur chacune de ses grandes faces à deux voiles sensiblement identiques, de façon à obtenir un produit intermédiaire parfaitement symétrique. L'épaisseur du voile avant association sur la nappe unidirectionnelle de carbone est comprise entre 0,5 et 200 μm, préférentiellement entre 10 et 170 μm. Sur

le produit intermédiaire selon l'invention, l'épaisseur de chaque voile est comprise dans la gamme allant de 0,5 à 50 microns, de préférence dans la gamme allant de 3 à 35 microns.

L'épaisseur des différents voiles avant association est déterminée par la norme NF EN ISO 9073-2 en utilisant la méthode A avec une aire d'essai de 2827 mm$^2$ (disque de 60 mm de diamètre) et une pression appliquée de 0,5 kPa.

Le produit intermédiaire selon l'invention présente une épaisseur comprise dans la gamme allant de 80 à 380 microns, de préférence dans la gamme allant de 90 à 320 microns, ce qui permet notamment d'atteindre le taux volumique de fibres souhaité sur la pièce finale produite, et même dans le cas où cette dernière est réalisée par infusion sous pression réduite.

La norme NF EN ISO 9073-2 ne permet pas de mesurer l'un des constituants d'un matériau combiné de plusieurs éléments. Deux méthodes ont donc été mises en place : l'une pour mesurer l'épaisseur du voile une fois contrecollé sur la nappe unidirectionnelle et l'autre pour mesurer l'épaisseur du produit intermédiaire.

Ainsi, l'épaisseur du non tissé ou voile fixé sur la nappe unidirectionnelle de carbone a été déterminée à partir de coupes microscopiques qui permettent une précision de +/- 1 $\mu$m. La méthode est la suivante : Un matériau intermédiaire associant une nappe unidirectionnelle constituée des fils de carbone et deux voiles contrecollés de chaque côté de la nappe est imprégné à l'aide d'un pinceau d'une résine qui polymérise à la température ambiante (Araldite et Araldur 5052 de la société Huntsman). L'ensemble est fixé entre deux plaques pour appliquer une pression de l'ordre de 2-5 kPa lors de la polymérisation. La mesure de l'épaisseur du voile présent dans le produit intermédiaire est indépendante de la pression exercée lors de cette étape. Une tranche de l'ensemble est enrobée dans une résine de prise à froid Epofix Kit de Struers, puis polie (à l'aide d'un papier abrasif à base de carbure de silicium d'un grain 320 $\mu$m et de différents feutres jusqu'à un grain de 0,3 $\mu$m) pour pouvoir être observée à l'aide d'un microscope optique Olympus BX 60 couplé à une camera Olympus ColorView IIIu. La mise en oeuvre de cette résine qui polymérise à l'ambiante n'a aucune influence sur l'épaisseur du voile mais permet uniquement d'effectuer les mesures. Le logiciel analySIS auto 5.0 de la société Olympus Soft Imaging Solution GmbH permet de prendre des photos et de réaliser les mesures d'épaisseur. Pour chaque matériau intermédiaire (nappe unidirectionnelle combinée à des voiles de chaque côté), 5 images sont prises avec un grossissement de 20. Sur chaque image, 15 mesures d'épaisseur du voile sont réalisées et la moyenne et l'écart-type de ces mesures sont déterminés.

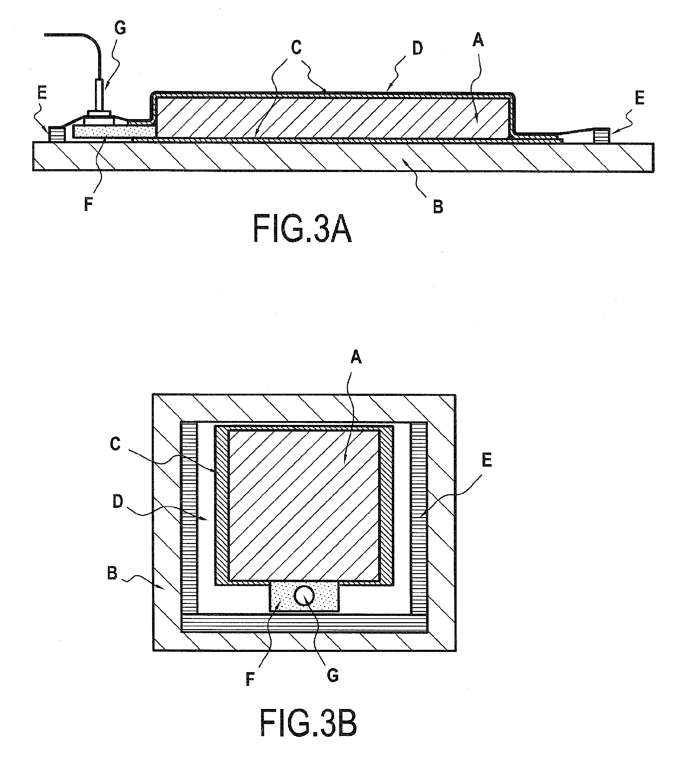

L'épaisseur du produit intermédiaire a été déterminée à partir de la méthode suivante, dont le dispositif est schématisé sur les **Figures 3a et 3b,** qui détermine une moyenne sur un empilement de produits intermédiaires. Sur ces Figures, A désigne la préforme ; B la plaque de support ; C le papier siliconé; D le film de mise sous vide ; E le joint de mise sous vide ; F le feutre de drainage et G la prise de vide. Cette méthode est classiquement utilisée par l'homme du métier et permet une mesure globale en minimisant la variabilité qui peut exister localement au sein d'un même produit intermédiaire. Une préforme constituée d'un empilement de différentes couches orientées du produit intermédiaire est placée entre deux couches de papiers siliconés de 130 g/m$^2$ et d'une épaisseur de 0,15 mm commercialisé par la société SOPAL dans un film de mise sous vide CAPRAN 518 de la société Aerovac (Aerovac Systèmes France, Umeco Composites, 1 rue de la Sausse 31240 Saint-Jean, France) et en contact avec un feutre de drainage Airbleed 10HA commercialisé par Aerovac. L'étanchéité de l'ensemble est assurée à l'aide d'un joint de mise sous vide SM5130 commercialisé par Aerovac. Un vide compris entre 0,1 et 0,2 kPa est tiré à l'aide d'une pompe à vide Leybold SV40 B (Leybold Vacuum, Bourg les Valence, France). Ensuite, l'épaisseur de la préforme est mesurée entre deux comparateurs digitaux TESA Digico 10 après soustraction de l'épaisseur de la bâche à vide et des papiers siliconés. 25 mesures sont réalisées par préforme et la moyenne et l'écart type de ces mesures sont déterminés. L'épaisseur obtenue du produit intermédiaire est alors déterminée en divisant l'épaisseur de la préforme totale par le nombre de couches de produits intermédiaires superposés.

De façon avantageuse, l'épaisseur du produit intermédiaire présente une faible variabilité, notamment avec des variations d'épaisseurs n'excédant pas 20 $\mu$m en écart-type, de préférence n'excédant pas 10 $\mu$m en écart-type, comme cela est notamment illustré dans les exemples ci-après.

Par ailleurs, de façon avantageuse, la masse surfacique du voile est comprise dans la gamme allant de 0,2 à 20 g/m$^2$.

L'association entre la nappe unidirectionnelle et les voiles peut être réalisée de manière discontinue, par exemple uniquement en certains points ou zones, mais est, de préférence, réalisée selon une liaison qui s'étend sur la totalité de la surface de la nappe, qualifiée de continue. L'association de la nappe unidirectionnelle aux deux voiles peut se faire par l'intermédiaire d'une couche adhésive, par exemple choisie parmi les adhésifs époxydes, adhésifs polyuréthane, les colles thermodurcissables, les adhésifs à base de monomère polymérisables, les adhésifs acryliques structuraux ou acryliques modifiés, les adhésifs hot-melt. Mais, le plus souvent l'association sera réalisée grâce au caractère collant que présentent les voiles à chaud, par exemple lors d'une étape de thermocompression permettant d'assurer une liaison entre la nappe unidirectionnelle et les voiles. Cette étape entraine le ramollissement des fibres thermoplastiques du voile, permettant de solidariser la nappe unidirectionnelle aux voiles, après refroidissement. Les conditions de chauffage et de pression, seront adaptées au matériau constitutif des voiles et à leur épaisseur. Le plus souvent une étape de thermocompression sur toute la surface de la nappe unidirectionnelle à une température comprise dans la gamme allant de $T_{f\,voile}$ - 15°C et $T_{f\,voile}$ + 60°C (avec $T_{f\,voile}$ qui désigne la température de fusion du voile) et sous une pression de 0,1 à 0,6 MPa sera réalisée. Il est, ainsi, possible d'atteindre des taux de compression du voile avant et après association allant de 1 à 10. L'étape de contrecollage du voile sur l'unidirectionnel de carbone est également déterminante pour maîtriser correctement l'épaisseur finale du produit intermédiaire. En effet, en fonction des conditions de température et de pression, notamment lors du contrecollage, il est possible de modifier, et donc d'ajuster, l'épaisseur du voile présent de chaque côté dans le produit intermédiaire. Il peut également être prévu d'associer la nappe unidirectionnelle au(x) voile(s), uniquement sur certaines zones, en réalisant un chauffage localisé du voile, de manière à obtenir une liaison qui pourrait s'apparenter à une liaison ponctuelle par couture ou par tricotage utilisée dans l'art antérieur pour la réalisation de matériaux multiaxiaux et lier des nappes unidirectionnelles entre elles. Le chauffage peut être réalisé par des moyens thermiques classiques à résistances ou par des moyens ultrasoniques. Des soudures ponctuelles conduisant à une soudure globale discontinue peuvent être prévues. Le terme « ponctuel » est utilisé, dans le cadre de la description, pour désigner des soudures individuelles appartenant à un ensemble de soudures et inclut donc des soudures de différentes formes. Dans le plan du matériau intermédiaire, les soudures ponctuelles pourront notamment se présenter sous la forme de lignes discontinues ou continues, c'est-à-dire s'étendant sur toute la largeur de la nappe unidirectionnelle, de points de différentes formes, notamment circulaire ou de type prismes, anneaux.... Des moyens de chauffage adaptés, agissant comme un poinçon, sont utilisés pour réaliser de telles soudures ponctuelles. Ces soudures ponctuelles conduisant à une soudure globale discontinue permettent, par exemple, de conduire à une meilleure drapabilité. Ces soudures ponctuelles seront réparties sur la surface du matériau intermédiaire pour assurer sa cohésion et permettent d'assurer une liaison entre la nappe unidirectionnelle et les voiles. De manière à assurer la liaison de l'ensemble des fils de la nappe unidirectionnelle, les soudures pourront s'étendre selon des lignes continues sur toute la largeur du matériau intermédiaire, par exemple transversalement à la nappe unidirectionnelle. Il est également possible de mettre en oeuvre des lignes discontinues ou des points de soudures décalées les unes par rapport aux autres, de manière à ce que chaque fil rencontre régulièrement une soudure, par exemple au moins une soudure tous les 100 mm, de préférence au moins une soudure tous les 10 mm.

La nappe unidirectionnelle peut être créée directement, en ligne, en amont de son association avec les voiles thermoplastiques. Les fils nécessaires à la constitution de la nappe sont alors dévidés de bobines et disposés sur un tapis convoyeur, de manière à s'étendre parallèlement les uns aux autres, de façon jointive. Un procédé tel que décrit dans le brevet EP 0972102 peut également être mis en oeuvre. Il pourra être également utilisé une nappe unidirectionnelle commerciale dont la cohésion et la manipulabilité sera, par exemple, assurée par des fils de liage, selon une liaison mécanique par tissage, ou selon une liaison chimique du fait de la nature polymérique des fils de liage. Dans tous les cas, la nappe unidirectionnelle qui va être solidarisée au(x) voile(s), offrira une couverture totale, avec un facteur d'ouverture de 0%. De telles nappes sont, par exemple, commercialisées par SIGMATEX UK Limited, Runcom Cheshire WA7 1TE, United Kingdom sous les références PW-BUD (ex : produit n°PC2780600 200GSM/PW-BUD/T700SC 12K 50C/0600mm), ou par la société OXEON AB, Suède, sous les références TEXERO. Une fois que la liaison entre les voiles et la nappe unidirectionnelle est réalisée, le matériau intermédiaire obtenu présente, en général, un facteur d'ouverture de 0 %. Le facteur d'ouverture est, par exemple, déterminé selon la méthode décrite dans les exemples ci-après.

Par la suite, une fois la nappe unidirectionnelle associée au(x) voile(s), il est possible de modifier son facteur d'ouverture et donc d'augmenter sa perméabilité, en effectuant des trous ou perforations. Dans de tels cas, il pourra être intéressant d'atteindre un facteur d'ouverture situé dans la gamme allant de 0,1 à 5%, de préférence dans la gamme allant de 1 à 2%, obtenu grâce à des perforations réalisées dans l'épaisseur du matériau intermédiaire, par exemple transversalement à ce dernier. Du fait que le matériau intermédiaire selon l'invention ne soit pas tissé, ni cousu, il présente une épaisseur fine contrôlée qui autorise d'avoir un facteur d'ouverture de l'ordre de 1% à 2%, tout en offrant la possibilité de pouvoir donner un stratifié présentant un TVF de 59 à 61%, notamment de l'ordre de 60% par infusion sous vide.

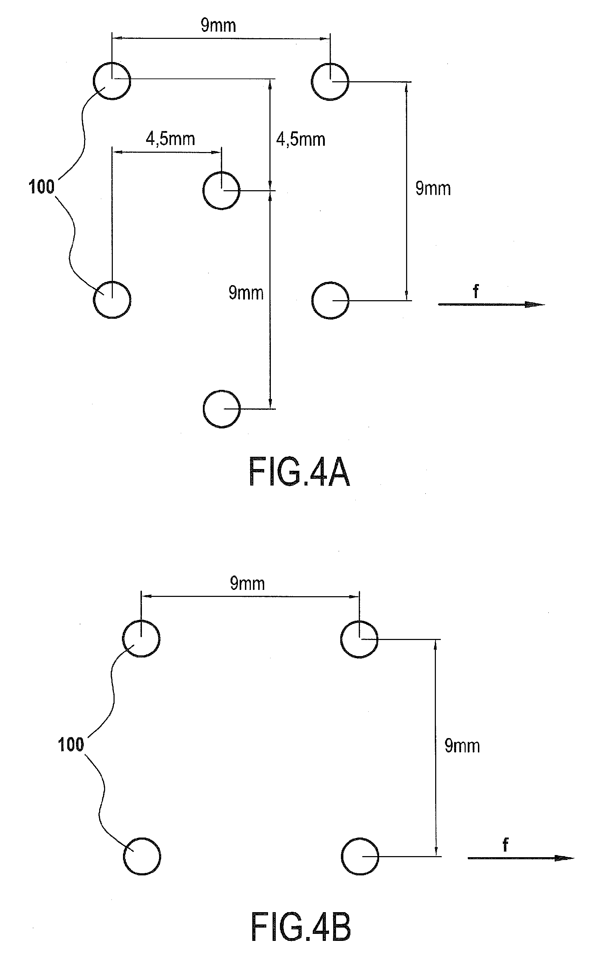

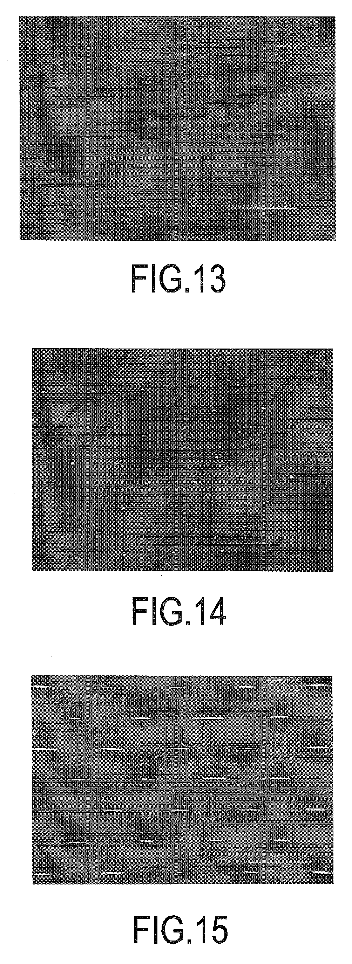

Par exemple, les perforations sont réalisées de façon régulière et sont, de préférence, réparties sur des lignes s'étendant selon une ou deux directions, avec notamment un pas d'espacement situé dans la gamme allant de 4 à 15 mm. Les **Figures 4A** et **4B** sont des vues schématiques de positionnement de perforations **100,** dans le plan du matériau intermédiaire, par rapport à la direction **f** correspondant à la direction des fils de la nappe unidirectionnelle. Les distances séparant les perforations sont purement illustratives et différentes variations pourront y être apportées, ces dernières sont mentionnées, car elles sont utilisées dans les exemples. Les soudures, d'une ligne parallèle à l'autre pourront être alignées comme illustré **Figure 4A** ou décalées, notamment d'un demi-pas comme illustré **Figure 4B**. La **Figure 4A** représente des perforations réalisées selon un mode alterné dans lequel les perforations s'étendent selon deux lignes perpendiculaires entre elles qui forment chacune un angle de 45° avec les fils de la nappe unidirectionnelle, de manière à ce que les perforations soient décalées d'un demi-pas si l'on se déplace parallèlement et perpendiculairement aux fils de la nappe unidirectionnelle. La **Figure 4B** illustre un autre mode dans lequel les perforations s'étendent selon deux lignes perpendiculaires entre elles, l'une d'entre elles étant parallèle aux fils de la nappe unidirectionnelle. Les perforations présentes sur le matériau intermédiaire ont, par exemple, une plus grande dimension, mesurée parallèlement à surface de la nappe unidirectionnelle, située dans la gamme allant de 1 à 10mm. Les perforations pourront, par exemple, présenter, dans le plan du matériau intermédiaire, une section circulaire ou plus ou moins allongée, sous la forme d'un oeil ou fente comme illustré **Figure 15,** notamment. La forme des perforations est notamment fonction du moyen de perforation utilisé. Selon de telles variantes de réalisation, il est ainsi possible d'atteindre une perméabilité transverse, notamment, de $10^{-13}$ m$^2$ à $10^{-14}$ m$^2$ pour des taux volumiques de fibre de 57 à 63%. La perméabilité transverse peut se définir par l'aptitude qu'a un fluide à traverser un matériau fibreux. Elle se mesure en m$^2$. Les valeurs données ci-dessus, ainsi que celles mentionnées dans les exemples qui suivent, sont mesurées avec l'appareillage et la technique de mesure décrite dans la Thèse intitulée « Problématique de la mesure de la perméabilité transverse de préformes fibreuses pour la fabrication de structures composites », par Romain Nunez, soutenue à l'Ecole Nationale Supérieure des Mines de Saint Etienne, le 16 Octobre 2009, à laquelle on pourra se référer pour plus de détails. La mesure est notamment réalisée avec un contrôle de l'épaisseur de l'échantillon pendant l'essai en utilisant deux chambres co-cylindriques permettant de réduire l'influence du « race-tracking » (passage du fluide à coté ou « sur le coté » du matériau dont la perméabilité est à mesurer). Le fluide utilisé est de l'eau et la pression est de 100 kPa (1 bar) +/- 1 kPa (0.01bar).

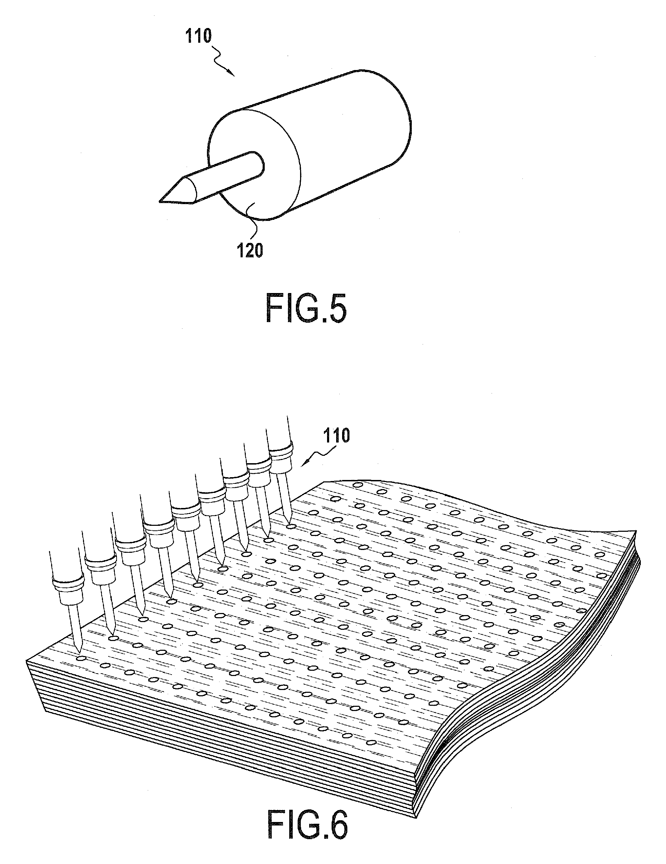

Les perforations pourront être réalisées avec tout moyen de perforation adapté, par exemple du type aiguille, picot ou autre. De manière à maintenir l'ouverture après retrait du moyen de perforation, un chauffage est réalisé autour du moyen de perforation. La perforation est alors réalisée par pénétration d'un moyen de perforation et d'un chauffage autour du moyen de perforation entraînant un ramollissement du voile, suivi d'un refroidissement. Il se produit donc une fusion du voile autour du moyen de perforation qui après refroidissement conduit à une sorte d'oeillet autour de la perforation. Lors du retrait du moyen de perforation, le refroidissement est instantané ou quasi instantanée, ce qui permet donc de figer la perforation obtenue. De préférence, le moyen de chauffage est directement intégré au moyen de perforation de telle sorte que le moyen de perforation est lui-même chauffé. Dans certains cas, il pourra être avantageux que le moyen de perforation **110** présente un épaulement **120** comme illustré **Figure 5** sur lequel le matériau intermédiaire pourra venir en butée, lors de la perforation. Cet épaulement est lui-même chauffé et permet de chauffer les voiles, tout effectuant une pression sur l'ensemble à souder, et ce sur une zone plus importante entourant la perforation. Le temps de pression est, par exemple de 0,1 à 2 secondes, préférentiellement de 0,5 à 1s. Il est possible de réaliser la perforation manuellement ou de préférence automatiquement grâce à des moyens de perforations alignées conformément aux lignes de perforation et pas d'espacement sélectionnés. Dans tous les cas, les perforations seront, de préférence, réalisées à très faiblement modifier l'épaisseur du matériau intermédiaire autour de la perforation. Dans le cas où seule une liaison par points est envisagée entre les voiles et la nappe unidirectionnelle, la réalisation des perforations pourra être réalisée simultanément à la liaison, le collage des voiles autour des perforations venant assurer la liaison de l'ensemble nappe unidirectionnelle/voile.

A titre d'exemple, une machine telle que représentée à la **Figure 2** pourra être mise en oeuvre, dans le cas d'une liaison par thermocompression et en l'absence de perforation. Dans le cas illustré **Figure 2,** les voiles sont associés à la nappe unidirectionnelle de fibres de carbone, juste après la production de cette dernière à la masse surfacique souhaitée par une étape de fixation ou contrecollage à chaud sous pression en continue (thermocompression).

Le produit intermédiaire selon l'invention présente une bonne manipulabilité, du fait de la présence des voiles thermoplastiques contrecollés sur chacune des faces de la nappe unidirectionnelle. Cette architecture autorise également une découpe aisée, sans effilochage notamment, selon des directions non parallèles, notamment transversale ou oblique, aux fibres de la nappe unidirectionnelle.

Pour la réalisation de pièces composites, un empilement ou drapage de matériaux intermédiaires selon l'invention (également nommés plis) est réalisé. Dans l'empilement obtenu, les plis sont en général disposés, de manière à orienter au moins deux nappes unidirectionnelles des plis selon des directions différentes. Toutes les nappes unidirectionnelles peuvent avoir des directions différentes ou seulement certaines d'entre elles, les autres pouvant avoir des directions identiques. Les orientations privilégiées sont le plus souvent, orientées dans les directions faisant un angle de 0°, + 45° ou - 45°(correspondant également à +135°), et +90° avec l'axe principal de la pièce à réaliser. L'axe principal de la pièce est généralement le plus grand axe de la pièce et le 0° se confond avec cet axe. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°. A titre d'exemples d'empilement symétrique, on peut citer 0°/90°/0°, ou 45°/135°/45°. Avant ajout de la résine nécessaire à la réalisation de la pièce, il est possible de solidariser les plis entre eux au sein de l'empilement, notamment par une étape intermédiaire de préformage en température et sous vide ou de soudage en quelques points à chaque ajout de pli, et ainsi réaliser une préforme. En particulier, on pourra envisager l'assemblage de 2 à 32 plis, notamment de 16 à 24 plis. Les nombres de plis les plus couramment utilisés sont 8, 16, 24 et 32 plis, qui pourront, par exemple, être des multiples des empilements à 4 plis quasi-isotropes ci-dessus mentionnés.

De façon avantageuse, l'empilement n'est pas solidarisé par couture, ni par tricotage, mais par une soudure réalisée grâce au caractère thermoplastique des voiles présents au sein de l'empilement. Pour cela, une opération de chauffage/refroidissement est réalisée sur la totalité de la surface de l'empilement ou au moins en certaines zones de la surface de l'empilement. Le chauffage entraine la fusion ou du moins le ramollissement du voile. Une telle liaison utilisant le caractère thermoplastique du voile est avantageuse car elle permet d'éviter tous les inconvénients que présente la présence de fils de couture ou tricotage, tels que notamment les problèmes d'ondulation, de microfissuration, la baisse des propriétés mécaniques au niveau des pièces composites ultérieurement obtenues ... Il est possible de réaliser une liaison par soudage discontinu, par opposition à un soudage continu obtenu par une thermocompression réalisée sur la totalité de la surface de l'empilement. Une soudure discontinue présente un avantage en terme énergétique et également pour la drapabilité de l'empilement lors de la réalisation des pièces composites ultérieures. Des soudures ponctuelles conduisant à une soudure globale discontinue peuvent être prévues. Dans le cadre de l'invention, pour chaque nappe unidirectionnelle de chaque matériau intermédiaire suivant, la surface de l'ensemble des soudures ponctuelles représente, par exemple, de 0,1 à 40%, de préférence de 0,5 à 15% de la surface de la nappe unidirectionnelle (cette surface étant égale à la surface d'une des faces de l'empilement). Le terme « ponctuel » est utilisé, dans le cadre de la description, pour désigner des soudures individuelles appartenant à un ensemble de soudures et inclut donc des soudures de différentes formes. Dans le plan de l'empilement c'est-à-dire parallèlement aux différents voiles et nappes unidirectionnelles, les soudures ponctuelles pourront notamment se présenter sous la forme de lignes discontinues ou continues, c'est-à-dire s'étendant sur toute la largeur de la nappe unidirectionnelle, de points de différentes formes, notamment circulaire ou de type prismes, anneaux.... Ces soudures ponctuelles seront réparties sur la surface de l'empilement pour assurer sa cohésion et permettent d'assurer une liaison entre les nappes unidirectionnelles et les voiles sur toute l'épaisseur de l'empilement. Une telle liaison pourra notamment être transversale. Des moyens de chauffage adaptés, notamment sous la forme de barre chauffante dans le cas de lignes de liaisons ou de poinçons chauffants dans le cas de points de liaison, dont la géométrie des points de contact avec l'empilement sera adaptée à la forme des liaisons ponctuelles souhaitées, pourront être utilisés. De tels moyens de chauffage pourront être porté à une température de 190 à 220°C et appuyé sur l'empilement avec une pression de 10 à 50kPa, par exemple pendant 0,1 à 2 s et préférentiellement pendant 0,5 à 1 s. Des moyens de soudure à ultrasons pourront également être utilisés. Bien entendu, ces valeurs sont purement illustratives et dépendront notamment du nombre de plis et de la matière thermoplastique constitutive des voiles. Par exemple, des points de soudure peuvent être réalisés de façon régulière et sont, de préférence, répartis sur des lignes s'étendant selon une ou deux directions, avec notamment un pas d'espacement situé dans la gamme allant de 4 à 15mm. Les **Figures 4A** et **4B** sont des vues schématiques de positionnement de perforations **100,** parallèlement à la surface de l'empilement, par rapport à la direction **f** correspondant à la direction 0°. Les distances séparant les perforations sont purement illustratives et différentes variations pourront y être apportées, ces dernières sont mentionnées, car elles sont utilisées dans les exemples. Parallèlement à la surface de l'empilement, les soudures, d'une ligne parallèle à l'autre pourront être alignées comme illustré **Figure 4A** ou décalées, notamment d'un demi-pas comme illustré **Figure 4B.** Comme illustré **Figures 4A** et **4B** pour les perforations d'un matériau intermédiaire selon l'invention, il est, par exemple, possible de réaliser les points de soudure selon un mode alterné dans lequel les points de soudure s'étendent, dans le plan de l'empilement, selon deux lignes perpendiculaires entre elles qui forment chacune un angle de 45° avec le 0°, de manière à ce que les points de soudure soient décalés d'un demi-pas sur les directions 0° et 90°. Un autre mode consiste, par exemple, à réaliser les points de soudure selon deux lignes perpendiculaires entre elles, l'une d'entre elles étant parallèle au 0°.

Il est possible de réaliser l'empilement en ajoutant, un à un, chaque pli et en assurant la liaison, après chaque ajout de pli. Il est également possible de réaliser la liaison en une seule fois, ce qui présente un intérêt industriel certain. Pour cela, bien que les moyens de chauffage précédemment décrits soient parfaitement adaptés, on peut également utiliser un moyen de chauffage qui va pénétrer au sein de l'empilement, et le traverser entièrement, afin d'opérer un chauffage direct sur tous les voiles au niveau de la zone de pénétration, y compris sur ceux qui sont situés au centre de l'empilement. Dans ce cas, de manière concomitante à la liaison des plis entre eux, il est opéré des perforations de l'empilement, permettant de créer des canaux de diffusion pour la résine, s'étendant dans l'épaisseur de l'empilement, le plus souvent, transversalement aux plis de l'empilement. Dans de tels cas, il pourra être intéressant d'atteindre un facteur d'ouverture situé dans la gamme allant de 0,05 à 3%, de préférence entre 0,1 et 0,6 %. De tels facteurs d'ouverture permettent d'obtenir des perméabilités intéressantes comparables ou supérieures à celles obtenues avec les multiaxiaux cousus traditionnels. Les perforations présentes sur l'empilement ont, par exemple, une plus grande dimension, mesurée parallèlement à la surface des plis, située dans la gamme allant de 1 à 10mm. Selon de telles variantes de réalisation, il est ainsi possible d'atteindre une perméabilité transverse pour l'empilement, notamment, de $10^{-11}$ à $10^{-14}$ m$^2$, de préférence de $10^{-12}$ m$^2$ à $10^{-13}$ m$^2$ pour des TVF de 57 à 63%, et notamment de 60 %. Les perforations pourront être réalisées avec tout moyen de perforation adapté, par exemple du type aiguille, picot ou autre. Un chauffage est réalisé autour du moyen de perforation, de manière à obtenir la liaison souhaitée entre les plis, ce qui permet également de figer la perforation. Comme dans le cas de la perforation d'un pli unitaire décrite précédemment, il se produit une fusion du voile autour du moyen de perforation qui après refroidissement conduit à une sorte d'oeillet autour de la perforation. Lors du retrait du moyen de perforation, le refroidissement est instantané ou quasi instantané, ce qui permet donc de figer la perforation obtenue. De préférence, le moyen de chauffage est directement intégré au moyen de perforation de telle sorte que le moyen de perforation est lui-même chauffé. Il est avantageux que le moyen de perforation présente un épaulement comme représenté **Figure 5** sur lequel l'empilement pourra venir en butée, lors de la perforation, ce qui va permettre de resserrer les plis entre eux lors de la liaison. Cet épaulement est lui-même chauffé et permet de chauffer les voiles, tout effectuant une pression sur l'ensemble à souder, et ce sur une zone plus importante entourant la perforation. De préférence, la pression exercée appartient à la gamme 10 à 50kPa et est choisie de manière à conserver une épaisseur sensiblement constante, en tout point de l'empilement. Il est possible de réaliser la perforation manuellement ou de préférence automatiquement grâce à des moyens de perforations 110 alignés conformément aux lignes de perforation et pas d'espacement sélectionnés, comme par exemple illustré **Figure 6.**

Pour la réalisation des pièces composites, une résine ou matrice, de type thermodurcissable, est alors ajoutée, par exemple par injection dans le moule contenant les plis (procédé "RTM", de l'anglais Resin Transfer Moulding), ou par infusion (au travers de l'épaisseur des plis : procédé "LRI", de l'anglais Liquid Resin Infusion ou procédé "RFI", de l'anglais Resin Film Infusion). Selon une variante non préférée, il est également possible de réaliser, en amont de la réalisation de l'empilement une enduction/imprégnation manuelle au rouleau ou au pinceau, sur chacun des plis, appliqués de manière successive sur la forme du moule utilisé.

La matrice utilisée est de type thermodurcissable. La résine injectée sera, par exemple choisie parmi les polymères thermodurcissables suivants : les époxydes, les polyesters insaturés, les vinylesters, les phénoliques, les polyimides, les bismaléimides.

La pièce composite est ensuite obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous vide et plus forte dans le cas de l'injection dans un moule RTM.

Les empilements non perforés selon l'invention, même s'ils donnent entière satisfaction, pour la réalisation de pièces composites par injection dans un moule, dans le cas d'une infusion sous pression réduite, leur application est limitée à la réalisation de pièces de faible épaisseur, par exemple inférieure à 10 mm. La présence de perforations permet d'augmenter la perméabilité de l'empilement et ainsi atteindre, même sur des pièces de grande épaisseur des TVF satisfaisants.

Les modes de liaison d'empilement ci-dessus définis avec des liaisons ponctuelles, avec ou sans perforations, peuvent également être mis en oeuvre avec tout type de matériaux intermédiaires, destinés à être associé à une résine thermodurcissable pour la réalisation de pièces composites, qui sont constitués d'une nappe unidirectionnelle de fibres de carbone associée, sur chacune de ses faces, à un voile de fibres thermoplastiques et en particulier avec des matériaux intermédiaires autres que ceux définis dans les revendications de la présente demande de brevet. En effet, quelque soit les voiles et nappes unidirectionnelles utilisées, de telles empilement, sont intéressant en terme de drapabilité et perméabilité dans le cas des empilements perforés. Bien entendu de façon préférée, les matériaux intermédiaires sont conformes, en termes d'épaisseur et de grammage, à ceux décrits dans le cadre de l'invention, étant donné qu'ils permettent d'atteindre, en infusion sous vide, des TVF élevés.

Selon une caractéristique avantageuse de l'invention, les pièces composites obtenues présentent un taux volumique de fibres de 57 à 63%, de préférence de 59 à 61% et notamment qui présentent une épaisseur importante, notamment supérieure à 10mm. Ces taux volumiques de fibres sont compatibles avec l'utilisation des structures pour des pièces primaires, c'est-à-dire des pièces critiques en aéronautique qui reprennent les efforts mécaniques (fuselage, voilure...).

Le taux volumique de fibres (TVF) d'une pièce composite est calculé à partir de la mesure de l'épaisseur d'une pièce composite en connaissant la masse surfacique de la nappe unidirectionnelle de carbone et les propriétés de la fibre de carbone, à partir de l'équation suivante :

$$TVF(\%) = \frac{n_{plis} \times \text{Masse surfacique UD}_{carbone}}{\rho_{fibre\ carbone} \times e_{plaque}} \times 10^{-1} \qquad \textbf{(1)}$$

Où e plaque est l'épaisseur de la plaque en mm,
$\rho_{fibre\ carbone}$ est la densité de la fibre de carbone en g/cm$^3$,
la masse surfacique UD $_{carbone}$ est en g/m$^2$.

Les pièces composites obtenues présentent également des propriétés mécaniques optimales, et notamment la résistance à l'impact (CAI, Compression Après Impact), les propriétés mécaniques montrant la sensibilité aux trous tels que la compression trouée (OHC, Open Hole Compression en anglais), la traction trouée (OHT, Open Hole Traction en anglais), le matage (Bearing en anglais), le cisaillement dans le plan (IPS, In-Plane Shear en anglais). En particulier, il est possible d'obtenir des pièces composites présentant une contrainte à rupture en compression après impact (CAI), mesurée selon la norme européenne préliminaire prEN 6038 publiée par ASD-STAN (AeroSpace and Defence Standard, Avenue de Tervueren 270, 1150 Woluwe-Saint-Pierre, Belgique), supérieure à 200 MPa sous un impact de 25 J. Il a également été constaté, en particulier lorsque la matrice de résine est de type époxy, une faible chute de la Tg de l'époxy après vieillissement du même ordre de grandeur que celle obtenue pour les préimprégnés standards, connus de l'homme du métier.

Les exemples ci-dessous permettent d'illustrer l'invention, mais n'ont aucun caractère limitatif.

**1. Matériaux utilisés**

Les produits intermédiaires testés sont des nappes unidirectionnelles constituées de fibres de carbone associées à un voile de chaque côté. 3 types de fibres de carbone ont été utilisés : des fibres de module intermédiaire (IM) en 12K commercialisées par Hexcel, des fibres de haute résistance (HR) en 12 K commercialisées par Hexcel, des fibres de haute résistance (HR) en 12K commercialisées par Toray; leurs propriétés mécaniques et physiques sont récapitulées dans le **Tableau 1.**

Plusieurs masses surfaciques de carbone des nappes unidirectionnelles ont été testées. Ces nappes sont réalisées en ligne et leur grammage en fibres de carbone est estimé à 134 g/m² ± 3% à partir de fibres de carbone Hexcel IM, 194 g/m² ± 3% à partir de fibres Hexcel IM, 134 g/m² ± 3% à partir de fibres Hexcel HR, 268 g/m² ± 3% à partir de fibres Hexcel HR et 150 g/m² ± 3% à partir de fibres Toray HR.

**Tableau 2 :** Propriétés caractéristiques des fibres de carbone

|  | *Hexcel IM* | *Hexcel HR* | *Toray HR* |
|---|---|---|---|
| Contrainte à rupture (MPa) | 5610 | 4830 | 4900 |
| Module de traction (GPa) | 297 | 241 | 240 |
| Elongation (%) | 1,9 | 1,8 | 2 |
| Masse/ unité de longueur (g/m) | 0,443 | 0,785 | 0,800 |
| Masse volumique (g/cm³) | 1,80 | 1,79 | 1,80 |
| Diamètre des filaments ($\mu$m) | 5 | 7 | 7 |

Trois types de voiles ont été utilisés, nommés voile 1, voile 2 (1R8D03 commercialisé par Protechnic, 66, rue des Fabriques, 68702 - CERNAY Cedex - France), voile 3. Ces voiles sont à base de mélange de polyamides et copolyamides (voile 1 et 2) ou de polyamides (voile 3). Ce type de voile est également commercialisé par des sociétés telles que Spunfab Ltd. / Keuchel Associates, Inc. (175 Muffin Lane Cuyahoga Falls, OH 44223, USA). Le voile 1 est constitué de filaments continus. Les voiles 2 et 3 sont constitués à partir de fibres courtes.

Les caractéristiques des voiles utilisés sont indiquées dans le **Tableau 3**. Le point de fusion des voiles indiqué dans le **Tableau 2** est déterminé par calorimétrie différentielle à balayage (DSC) selon la norme ISO 11357-3. La masse surfacique est mesurée suivant la norme ISO 3801. Le taux de porosité indiqué dans le **Tableau 2** est calculé à partir de la formule suivante :

$$\text{Taux de porosité}_{voile}\ (\%) = 1 - \frac{\text{Masse surfacique du voile}}{\rho_{\text{matière du voile}} \ \text{x} \ e_{voile}} \text{x} 100 \qquad \textbf{(2)}$$

Où - la masse surfacique du voile est exprimée en kg/m²,
- $\rho_{\text{matière}}$ du voile est exprimée en kg/m³,
- $e_{voile}$ est exprimée en m.

**Tableau 3 :** Caractéristiques des voiles utilisés (les valeurs mentionnées après ± représentent l'écart type)

| Référence | 1 | 2 | 3 |
|---|---|---|---|
| Point de fusion du voile (°C) | 178 | 160 | 178 |
| Masse surfacique (g/m²) | 6,7±0,5 | 2,8±0,1 | 3,7±0,1 |
| Diamètre des filaments ($\mu$m) * | 44±12 | 9±2 | 13±3 |

(suite)

| Référence | 1 | 2 | 3 |
|---|---|---|---|
| Epaisseur du voile (μm) | 161 ± 18 | 59 ± 12 | 69 ± 12 |
| Taux de porosité (%) calculé à partir de la formule (2) | 96 | 98 | 97 |
| * Mesurées par analyse d'images | | | |

## 2. Fabrications des produits intermédiaires testés

Le voile est contrecollé directement de chaque côté des nappes unidirectionnelles à base de fibres de carbone grâce à une machine (**Figure 2**) spécifiquement dédiée à cet effet juste après la formation de la nappe au grammage souhaité. Les fils de carbone **1** sont déroulés à partir de bobines de carbone **3** fixées sur un cantre **4,** passent au travers d'un peigne **5,** sont conduits dans l'axe de la machine à l'aide d'un rouleau de guidage **6** et d'un peigne **7,** d'une barre de guidage **8a.** Les fils de carbone sont préchauffés à l'aide d'une barre chauffante **9** et sont étalés ensuite grâce à la barre d'étalement **8b** et la barre chauffante **10** à la masse surfacique de carbone souhaitée de la nappe unidirectionnelle **17.** Les rouleaux de voiles **13a** et **13b** sont déroulés sans tension et transportés à l'aide de tapis continus **15a** et **15b** fixés entre les rouleaux libres en rotation **14a, 14b, 14c, 14d** et les barres chauffées **12a, 12b.** Les voiles **2a** et **2b** sont préchauffés dans les zones **11a** et **11b** avant d'être en contact avec les fils de carbones **1** et contrecollés de part et d'autre de deux barres chauffées **12a** et **12b** dont l'entrefer est contrôlé. Une calandre **16,** qui peut être refroidie, applique ensuite une pression sur la nappe unidirectionnelle avec un voile de chaque côté **17.** Un rouleau de renvoi **18** permet de rediriger le produit **17** vers le système de traction comprenant un trio d'appel **19** puis d'enroulage **20** piloté par un moteur pour former un rouleau constitué du produit intermédiaire revendiqué **17.**

Les conditions d'essais pour la fabrication des nappes unidirectionnelles de carbone combinées avec un voile de chaque côté sont indiquées dans le **Tableau 3** ci-après.

**Tableau 3 :** Paramètres de procédé pour la mise en oeuvre des nappes unidirectionnelles associées à un voile de chaque côté

| Exemple | Type de Fibres | Masse surfacique mesurée du produit intermédiaire (g/m$^2$) | Type de voile | Vitesse ligne (m/min) | $T_{barre}$ (°C) (9) | $T_{barre}$ (°C) (10) | T prehauffage voile (°C) (11a & 11b) | $T_{barres}$ (°C) (12a & 12b) |
|---|---|---|---|---|---|---|---|---|
| Comparatif 1 | Hexcel IM | 134 | Pas de voile | - | - | - | - | - |
| 2 | Hexcel IM | 149 | Voile 1 | 1,3 | 200 | 200 | 120 | 270 |
| Comparatif 2b | Hexcel IM | 149 | Voile 1 | 1,3 | 200 | 200 | 120 | 170 |
| 3 | Hexcel IM | 141 | Voile 2 | 1,6 | 200 | 200 | 120 | 255 |
| 3b | Hexcel IM | 141 | Voile 2 | 1,3 | 200 | 200 | 120 | 143 |
| 4 | Hexcel IM | 142 | Voile 3 | 1,8 | 200 | 200 | 120 | 265 |
| 4b | Hexcel IM | 142 | Voile 3 | 1,3 | 200 | 200 | 120 | 187 |
| Comparatif 5 | Hexcel IM | 199 | Pas de voile | - | - | - | - | - |

(suite)

| Exemple | Type de Fibres | Masse surfacique mesurée du produit intermédiaire (g/m$^2$) | Type de voile | Vitesse ligne (m/min) | T$_{barre}$ (°C) (9) | T$_{barre}$ (°C) (10) | T prehauffage voile (°C) (11a & 11b) | T$_{barres}$ (°C) (12a & 12b) |
|---|---|---|---|---|---|---|---|---|
| 6 | Hexcel IM | 213 | Voile 1 | 1,6 | 200 | 200 | 120 | 270 |
| 6b | Hexcel IM | 213 | Voile 1 | 1,3 | 200 | 200 | 120 | 170 |
| 7 | Hexcel IM | 197 | Voile 2 | 1,8 | 200 | 200 | 120 | 255 |
| 7b | Hexcel IM | 197 | Voile 2 | 1,3 | 200 | 200 | 120 | 145 |
| 8 | Hexcel IM | 207 | Voile 3 | 1,3 | 200 | 200 | 120 | 265 |
| 8b | Hexcel IM | 207 | Voile 3 | 1,3 | 200 | 200 | 120 | 193 |
| Comparatif 9 | Toray HR | 150 | Pas de voile | - | - | - | - | - |
| 10 | Toray HR | 168 | Voile 1 | 1,3 | 200 | 200 | 120 | 255 |
| 10b | Toray HR | 168 | Voile 1 | 1,3 | 200 | 200 | 120 | 188 |
| 11 | Toray HR | 159 | Voile 2 | 1,6 | 200 | 200 | 120 | 250 |
| 11b | Toray HR | 159 | Voile 2 | 1,3 | 200 | 200 | 120 | 190 |
| 12 | Toray HR | 162 | Voile 3 | 1,3 | 200 | 200 | 120 | 265 |
| 12b | Toray HR | 162 | Voile 3 | 1,3 | 200 | 200 | 120 | 210 |
| Comparatif 13 | Hexcel HR | 136 | Pas de voile | - | - | - | - | - |
| 14 | Hexcel HR | 156 | Voile 1 | 1,3 | 200 | 200 | 120 | 270 |
| 14b | Hexcel HR | 157 | Voile 1 | 1,3 | 200 | 200 | 120 | 170 |
| 15 | Hexcel HR | 147 | Voile 2 | 1,8 | 200 | 200 | 120 | 255 |
| 15b | Hexcel HR | 146 | Voile 2 | 1,3 | 200 | 200 | 120 | 145 |
| 16 | Hexcel HR | 147 | Voile 3 | 1,5 | 200 | 200 | 120 | 265 |
| 16b | Hexcel HR | 150 | Voile 3 | 1,3 | 200 | 200 | 120 | 190 |

(suite)

| Exemple | Type de Fibres | Masse surfacique mesurée du produit intermédiaire (g/m$^2$) | Type de voile | Vitesse ligne (m/min) | T$_{barre}$ (°C) (9) | T$_{barre}$ (°C) (10) | T prehauffage voile (°C) (11a & 11b) | T$_{barres}$ (°C) (12a & 12b) |
|---|---|---|---|---|---|---|---|---|
| Comparatif 17 | Hexcel HR | 268 | Pas de voile | - | - | - | - | - |
| 18 | Hexcel HR | 281 | Voile 1 | 1,3 | 200 | 200 | 120 | 270 |
| 18b | Hexcel HR | 281 | Voile 1 | 1,3 | 200 | 200 | 120 | 170 |
| 19 | Hexcel HR | 274 | Voile 2 | 1,6 | 200 | 200 | 120 | 255 |
| 20 | Hexcel HR | 276 | Voile 3 | 1,3 | 200 | 200 | 120 | 265 |
| 20b | Hexcel HR | 276 | Voile 3 | 1,3 | 200 | 200 | 120 | 190 |

Dans le cas de nappes unidirectionnelles sans voile (exemple comparatif 1), les fils de carbone sont maintenus à l'aide d'un fil thermofusible de 280 dtex réparti tous les 50 mm perpendiculairement à l'orientation des fibres de carbone. Dans le cas des exemples représentatifs de l'invention où les nappes unidirectionnelles sont associées à deux voiles, les nappes sont constituées directement sur la machine, en amont du contre-collage avec les voiles.

**3. Détermination des épaisseurs après contre-collage du voile et du produit intermédiaire**

Les épaisseurs des voiles après contre-collage sur les nappes unidirectionnelles sont mesurées par analyse d'images. Le Tableau **4** récapitule les épaisseurs moyennes et les écart-types des voiles (sur 75 valeurs) obtenue par cette méthode pour chaque configuration étudiée. Dans ce même Tableau **4,** les épaisseurs des différents produits intermédiaires comprenant les nappes de carbone associées à un voile de chaque côté sont indiquées. Ces mesures sont déduites à partir de la mesure des épaisseurs de préformes sous pression atmosphérique selon les méthodes décrites dans la description.

**Tableau 4 : Epaisseur des produits intermédiaires (nappes UD associées à un voile de chaque côté) utilisés et des voiles sur ces nappes**

| Exemple | Epaisseur voile sur nappe (µm) | Ecart - type épaisseur voile | Epaisseur nappe (UD + voiles) (µm) | Ecart - type épaisseur Nappe |
|---|---|---|---|---|
| Comparatif 1 | - | - | 120 | 4 |
| 2 | 20 | 8 | 153 | 3 |
| Comparatif 2b | 62 | 15 | 183 | 4 |
| 3 | 12 | 6 | 120 | 4 |
| 3b | 14 | 5 | 123 | 5 |
| 4 | 13 | 4 | 145 | 4 |
| 4b | 23 | 7 | 157 | 4 |
| Comparatif 5 | - | - | 175 | 4 |
| 6 | 21 | 9 | 198 | 2 |
| 6b | 32 | 8 | 224 | 3 |
| 7 | 9 | 3 | 184 | 5 |

(suite)

| Exemple | Epaisseur voile sur nappe (µm) | Ecart - type épaisseur voile | Epaisseur nappe (UD + voiles) (µm) | Ecart - type épaisseur Nappe |
|---|---|---|---|---|
| 7b | 11 | 3 | 197 | 3 |
| 8 | 11 | 3 | 185 | 3 |
| 8b | 20 | 7 | 195 | 3 |
| Comparatif 9 | - | - | 131 | 2 |
| 10 | 19 | 6 | 169 | 3 |
| 10b | 48 | 16 | 204 | 3 |
| 11 | 13 | 6 | 166 | 4 |
| 11b | 13 | 4 | 161 | 4 |
| 12 | 12 | 3 | 155 | 4 |
| 12b | 22 | 7 | 163 | 4 |
| Comparatif 13 | - | - | 123 | 4 |
| 14 | 20 | 7 | 162 | 4 |
| 14b | 46 | 12 | 192 | 3 |
| 15 | 12 | 4 | 155 | 3 |
| 15b | 15 | 6 | 157 | 7 |
| 16 | 15 | 5 | 154 | 3 |
| 16b | 21 | 9 | 164 | 6 |
| Comparatif 17 | - | - | 237 | 3 |
| 18 | 19 | 7 | 287 | 5 |
| 18b | 49 | 25 | 301 | 4 |
| 19 | 12 | 6 | 264 | 4 |
| 20 | 16 | 6 | 280 | 7 |
| 20b | 22 | 8 | 286 | 6 |

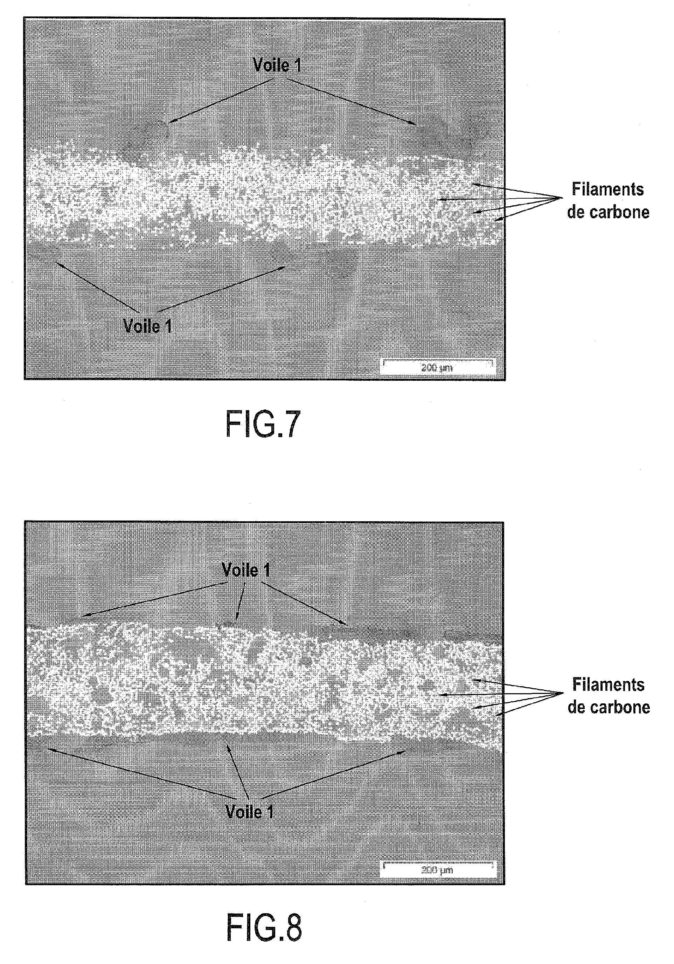

La **Figure 7** est une coupe micrographique du produit intermédiaire de l'exemple 2b (134 g/m$^2$ de fibres de carbone IM Hexcel associé au voile 1 de chaque côté).

La **Figure 8** est une coupe micrographique du produit intermédiaire de l'exemple 2 (134 g/m$^2$ de fibres de carbone IM Hexcel associé au voile 1 de chaque côté)

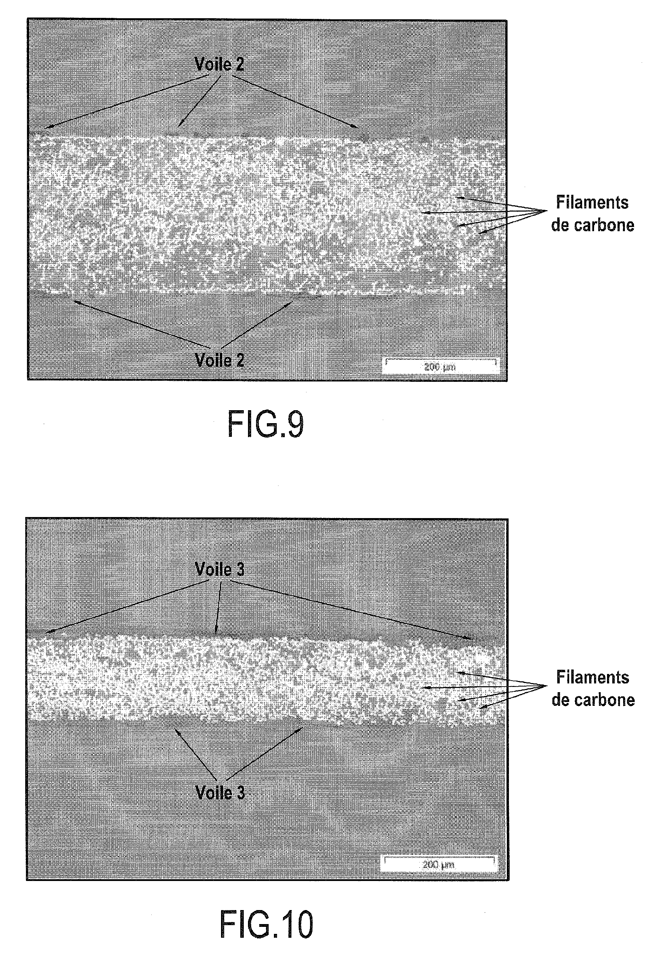

La **Figure 9** est une coupe micrographique du produit intermédiaire de l'exemple 3b (134 g/m$^2$ de fibres de carbone IM Hexcel associé au voile 2 de chaque côté).

La **Figure 10** est une coupe micrographique du produit intermédiaire de l'exemple 4 (134 g/m$^2$ de fibres de carbone IM Hexcel associé au voile 3 de chaque côté).

## 4. Réalisation de plaques

### 4.1 La définition de la séquence d'empilement

Les plaques réalisées sont quasi-isotropes, c'est-à-dire qu'elles sont constituées d'un ensemble de plis élémentaires avec les différentes orientations (0°/45°/-45°/90°). L'empilement est également symétrique. Le nombre de plis constituant l'empilement est déterminé à partir de la formule suivante déduite de la formule (1):

$$n_{plis} = \frac{TVF(\%) \, x\rho_{\text{fibre carbone}} \, x \, e_{\text{plaque}}}{\text{Masse surfacique UD}_{\text{carbone}}} \, x \, 10 \qquad \textbf{(2)}$$

sachant que :

- l'épaisseur visée de la plaque est la plus proche de 4 mm (définie par la norme prEN 6038), $e_{\text{plaque}}$ est exprimée en mm,
- le taux volumique de fibres (TVF) visé pour obtenir les meilleures propriétés mécaniques, est de 60% et $\rho_{\text{fibre carbone}}$ est exprimée en g/cm$^3$,
- La masse surfacique de l'UD$_{\text{carbone}}$ est exprimée en g/m$^2$.

L'empilement est ainsi constitué de 32 plis dans le cas d'un grammage de carbone de 134 et 150 g/m$^2$ et s'écrit en notation abrégée : [+45/0/- 45/90]$_{4s}$. Pour des grammages de carbone de 194 et 268 g/m$^2$, le nombre de plis est respectivement de 24 et 16 plis. L'empilement s'écrit en notation abrégée [+45/0/-45/90]$_{3s}$ et [+45/0/-45/90]$_{2s}$. Chaque pli correspond à un matériau voile/UD/voile.

### *4.2 Fabrication de la plaque composite*

Les différents plis sont maintenus entre eux en soudant légèrement à chaque ajout de nouveau pli en quelques points à l'aide d'un fer à souder. L'ensemble constitue une préforme. La préforme de 340 mm x 340 mm, constituée de la séquence d'empilement adapté au grammage de carbone est placée dans un moule d'injection sous une presse. Un cadre d'épaisseur connu entoure la préforme afin d'obtenir le taux volumique de fibres (TVF) souhaité.

La résine époxy commercialisée sous la référence HexFlow RTM6 par Hexcel est injectée à 80°C sous 2 bars à travers la préforme qui est maintenue à 120°C, température des plateaux de la presse. La pression appliquée sur chacun des deux plateaux de la presse est de 5 bars. Lorsque que la résine apparaît au point de sortie du moule, le tuyau de sortie est fermé et le cycle de polymérisation commence (montée jusqu'à 180°C à 3°C/min, puis maintien 2 heures à 180°C, puis refroidissement à 5 °C/min). 6 éprouvettes par type de configuration de 150 x 100mm (norme prEN 6038) sont ensuite découpées pour réaliser le test de compression après impact (CAI).

### 5. Essais mécaniques

Les éprouvettes (6 par type de configuration) sont fixées sur un dispositif comme indiqué dans la norme prEN 6038. Les éprouvettes ont été soumises à un seul impact d'énergie équivalente à 25J à l'aide d'un équipement adapté à la norme européenne préliminaire prEN 6038 publiée par ASD-STAN (AeroSpace and Defence Standard, Avenue de Tervueren 270, 1150 Woluwe-Saint-Pierre, Belgique). Les essais de compression sur une machine de tests mécaniques Instron 5582 de capacité 100 kN rénovée par la société Zwick (Zwick France Sarl, Roissy Charles de Gaule, France).

Les résultats de contraintes à rupture en compression après impact sont répertoriés dans les **Tableaux 5a à 5e.**

Tableau 5a : Résultats de contrainte à rupture de compression après impact (CAI) à 25 J pour les différents types d'unidirectionnel IM 134 g/m$^2$ pour différents types de voile

| | Exemple comparatif 1 | Exemple 2 | Exemple comparatif 2b | Exemple 3 | Exemple 3b | Exemple 4 | Exemple 4b |
|---|---|---|---|---|---|---|---|
| CAI (MPa) | 142 | 260 | 275 | 289 | 279 | 305 | 308 |
| Ecart type (MPa) | 6 | 15 | 17 | 6 | 18 | 24 | 19 |

Tableau 5b : Résultats de contrainte à rupture de compression après impact (CAI) à 25 J pour les différents types d'unidirectionnel IM 194 g/m$^2$ pour différents types de voile

|  | Exemple 5 comparatif | Exemple 6 | Exemple 6b | Exemple 7 | Exemple 7b | Exemple 8 | Exemple 8b |
|---|---|---|---|---|---|---|---|
| CAI (MPa) | 126 | 319 | 247 | 285 | 282 | 291 | 294 |
| Ecart type (MPa) | 14 | 8 | 4 | 5 | 3 | 17 | 5 |

Tableau 5c : Résultats de contrainte à rupture de compression après impact (CAI) à 25 J pour les différents types d'unidirectionnel HR Toray 150 g/m$^2$ pour différents types de voile

|  | Exemple comparatif 9 | Exemple 10 | Exemple 10b | Exemple 11 | Exemple 11b | Exemple 12 | Exemple 12b |
|---|---|---|---|---|---|---|---|
| CAI (MPa) | 151 | 312 | 337 | 354 | 294 | 320 | 313 |
| Ecart type (MPa) | 11 | 9 | 12 | 9 | 21 | 11 | 18 |

Tableau 5d : Résultats de contrainte à rupture de compression après impact (CAI) à 25 J pour les différents types d'unidirectionnel Hexcel HR 134 g/m$^2$ pour différents types de voile

|  | Exemple comparatif 13 | Exemple 14 | Exemple 14b | Exemple 15 | Exemple 15b | Exemple 16 | Exemple 16b |
|---|---|---|---|---|---|---|---|
| CAI (MPa) | 175 | 299 | 306 | 280 | 280 | 288 | 323 |
| Ecart type (MPa) | 11 | 17 | 17 | 12 | 12 | 11 | 20 |

Tableau 5e : Résultats de contrainte à rupture de compression après impact (CAI) à 25 J pour l'unidirectionnel HR Hexcel 268 g/m$^2$ sans voile et avec le voile 2

|  | Exemple comparatif 17 | Exemple 18 | Exemple 18b | Exemple 19 | Exemple 20 | Exemple 20b |
|---|---|---|---|---|---|---|
| CAI (MPa) | 135 | 288 | 274 | 253 | 248 | 248 |
| Ecart type (kPa) | 13 | 16 | 14 | 14 | 13 | 9 |

### 6. Contrôle des épaisseurs des plaques et déduction des taux volumique de fibres (TVF)

Les plaques sont positionnées entre deux comparateurs digital TESA Digico 10 pour mesurer leurs épaisseurs. 24 mesures, réparties de manière équidistante sur la surface sont effectuées par plaque.

Les **Tableaux 6a à 6e** présentent les résultats de mesures d'épaisseurs des plaques obtenues à partir des différents matériaux intermédiaires fabriqués. A partir des épaisseurs des plaques, les différents TVF peuvent être calculés par la formule (2). L'exemple comparatif 2b montre l'influence de l'épaisseur des voiles contrecollés sur la nappe unidirectionnelle. L'épaisseur du voile contrecollé sur la nappe dans le cas de l'exemple 2b (**Tableau 4**) est de 62 μm, épaisseur supérieure à l'épaisseur de voile revendiquée. L'utilisation de ce voile plus épais aboutit à la fabrication d'une pièce ayant un taux volumique de fibre inférieur à celui requis pour l'utilisation de la pièce pour une structure primaire.

**Tableau 6a :** Mesures des épaisseurs des différentes plaques réalisées à partir de nappes unidirectionnelles de fibres de carbone Hexcel IM en 134 g/m$^2$ avec différents types de voiles ; séquence d'empilement [+45/0/- 45/90]$_{4s}$

|  | Exemple comparatif 1 | Exemple 2 | Exemple Comparatif 2b | Exemple 3 | Exemple 3b | Exemple 4 | Exemple 4b |
|---|---|---|---|---|---|---|---|
| Epaisseur mesurée (mm) | 3,93 | 3,94 | 4,25 | 3,95 | 3,90 | 3,94 | 3,95 |
| Ecart type | 0,03 | 0,02 | 0,2 | 0,03 | 0,05 | 0,02 | 0,03 |
| TVF calculé (%) | **60,7** | **60,5** | *56,0* | **60,3** | **61,2** | **60,5** | **60,3** |

**Tableau 6b :** Mesures des épaisseurs des différentes plaques réalisées à partir de nappes unidirectionnelles Hexcel IM en 194 g/m$^2$ avec différents types de voiles ; séquence d'empilement [+45/0/-45/90]$_{3s}$

|  | Exemple comparatif 5 | Exemple 6 | Exemple 6b | Exemple 7 | Exemple 7b | Exemple 8 | Exemple 8b |
|---|---|---|---|---|---|---|---|
| Epaisseur mesurée (mm) | 4,28 | 4,24 | 4,32 | 4,25 | 4,31 | 4,32 | 4,28 |
| Ecart type | 0,06 | 0,03 | 0,02 | 0,05 | 0,05 | 0,03 | 0,051 |
| TVF calculé (%) | **60,4** | **61,0** | **59,9** | **60,9** | **60,0** | **59,9** | **60,5** |

**Tableau 6c :** Mesures des épaisseurs des différentes plaques réalisées à partir de nappes unidirectionnelles HR Toray en 150 g/m$^2$ avec différents types de voiles ; séquence d'empilement [+45/0/-45/90]$_{4s}$

|  | Exemple comparatif 9 | Exemple 10 | Exemple 10b | Exemple 11 | Exemple 11b | Exemple 12 | Exemple 12b |
|---|---|---|---|---|---|---|---|
| Epaisseur mesurée (mm) | 4,44 | 4,40 | 4,45 | 4,48 | 4,39 | 4,4 | 4,4 |
| Ecart type | 0,05 | 0,03 | 0,04 | 0,04 | 0,05 | 0, 03 | 0,04 |
| TVF calculé (%) | **60,8** | **61,3** | **60,6** | **60,2** | **61,4** | **61,3** | **61,3** |

**Tableau 6d :** Mesures des épaisseurs des différentes plaques réalisées à partir de nappes unidirectionnelles de fibres de carbone Hexcel HR en 134 g/m$^2$ avec différents types de voiles ; séquence d'empilement [+45/0/-45/90]$_{4s}$

| | Exemple comparatif 13 | Exemple 14 | Exemple 14b | Exemple 15 | Exemple 15b | Exemple 16 | Exemple 16b |
|---|---|---|---|---|---|---|---|
| Epaisseur mesurée (mm) | 3,9 | 4,09 | 4,11 | 3,96 | 3,90 | 3,98 | 4,09 |
| Ecart type | 0,05 | 0,10 | 0,10 | 0,04 | 0,04 | 0,03 | 0,09 |
| TVF calculé (%) | **61,4** | **58,6** | **58,3** | **60.4** | **61,4** | **60,3** | **58,6** |

**Tableau 6e :** Mesures des épaisseurs des différentes plaques réalisées à partir de nappes unidirectionnelles de fibres de carbone Hexcel HR en 268 g/m$^2$ avec différents types de voiles ; séquence d'empilement [+45/0/- 45/90]$_{2s}$

| | Exemple comparatif 17 | Exemple 18 | Exemple 18b | Exemple 19 | Exemple 20 | Exemple 20b |
|---|---|---|---|---|---|---|
| Epaisseur mesurée (mm) | 3,87 | 3,98 | 3,97 | 3,93 | 3,92 | 3,89 |
| Ecart type | 0,04 | 0,03 | 0,04 | 0,04 | 0,04 | 0,06 |
| TVF calculé (%) | **61,8** | **60,2** | **60,8** | **61** | **61,2** | **61,6** |

L'équation **(3)** permet de calculer le taux volumique de fibres de chaque plaque composite réalisée par injection. Il est important de noter que quelles que soient les configurations utilisées, le TVF des plaques est compris dans l'intervalle 60 $\pm$ 2 % qui est un critère indispensable pour la réalisation de pièces de structures primaires.

**7. Exemples avec perforations**

Un robot armé d'une tête de perforation telle qu'illustrée **Figure 5** a été utilisé. Deux diamètres ont été utilisés pour la partie pénétrante de la tête : diamètre de 0,8mm et de 1,6mm. Pour effectuer les soudures-perforations, ces têtes ont été portées à une température de 200°C et les perforations sont réalisées avec une pression de 30 kPa, pendant 0,8 s.

**7.1 Multiaxial quasi-isotrope soudé par points (4 plis)**

Un empilement de 4 plis, orientés à 45°, 0°, 135° et 90° est réalisé en ligne sur une machine de fabrication de multiaxiaux. Des points de soudure-perforation distants de 9mm, comme illustrés **Figure 4A,** sont réalisés dans les orientations 0° et 90° par rapport à l'axe de la machine. En mode alterné, des points de soudure-perforation distants de 9 et 4,5mm comme illustrés **Figure 4B,** sont réalisés dans les orientations +45° et +135° par rapport à l'axe de la machine. Les empilements suivants ont été réalisés :

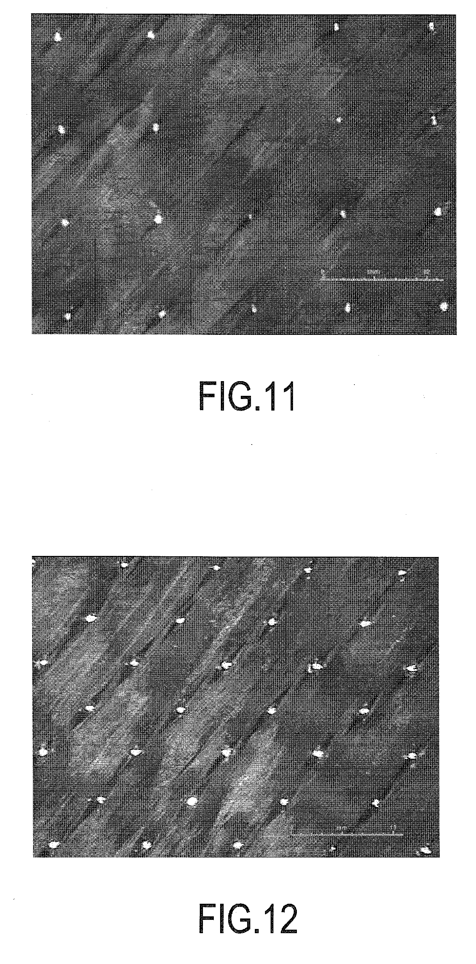

- Exemple 21 : 4 plis conformes à l'exemple 8 - tête de perforation ø1,6, dont une photographie est donnée **Figure 11**
- Exemple 22 : 4 plis conformes à l'exemple 8 - tête de perforation ø1,6 en mode alterné, dont une photographie est donnée **Figure 12**
- Exemple 23 : 4 plis conformes à l'exemple 8 - tête de perforation ø0,8, dont une photographie est donnée **Figure 13**
- Exemple 24 : 4 plis conformes à l'exemple 8 - tête de perforation ø0,8 en mode alterné, dont une photographie est donnée **Figure 14**
- Exemple 25 : 1 pli conforme à l'exemple 8 - tête de perforation ø1,6, dont une photographie est donnée **Figure 15**
- Exemple 26:4 plis conformes à l'exemple 8 soudés (sans perforation) - Le moyen de soudage est une tête de diamètre 8mm portée à 200°C, identique aux têtes de perforations mais sans l'aiguille. Les soudures sont disposées conformément à la Figure 4a, mais espacées de 50 mm. Les soudures sont réalisées avec une pression de 30 kPa.

Et à titre de comparaison pour la perméabilité transverse :

- Tissu Sergé 2/2 - ref. Hexcel 48302
- Multiaxial quasi-isotrope $4 \times 194 g/m^2$ HR cousu fil 76dtex - 5mmx5mm - point de chainette

**7.2 mesures de perméabilité transverse**

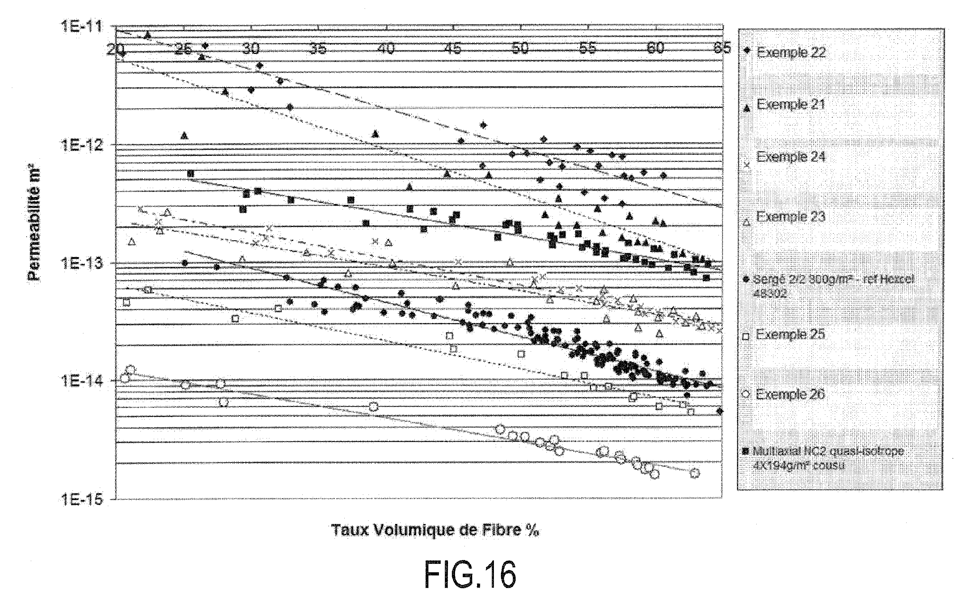

La machine et la méthode de mesure utilisées sont décrites dans la Thèse intitulée « Problématique de la mesure de la perméabilité transverse de pré-formes fibreuses pour la fabrication de structures composites », par Romain Nunez, soutenue à l'Ecole Nationale Supérieure des Mines de Saint Etienne, le 16 Octobre 2009. La variation du TVF est obtenue par des variations successives de l'épaisseur de l'échantillon. Quatre essais ont été réalisés pour chaque type de matériaux. Les résultats sont présentés **Figure 16** et montrent que la courbe la plus basse correspond à la perméabilité de quatre matériaux intermédiaires conformes à l'invention qui ont été soudés, en l'absence de perforation. Il apparait clairement que l'empilement obtenu est très peu perméable, et sera donc difficilement imprégnable sous vide en forte épaisseur. Les perforations permettent incontestablement d'améliorer la perméabilité pour se rapprocher, voir dépasser celle obtenue avec un multiaxial cousu. La réalisation de perforations sur un matériau intermédiaire seul permet également d'améliorer sensiblement la perméabilité transverse, mais d'une manière moindre, par rapport à un empilement complet et perforé de quatre plis.

|  | Taux Volumique de Fibre en % | |
| --- | --- | --- |
| *Valeurs perméabilité en m²* | 55 | 60 |
| Exemple 22 | 5,5E-13 | 3,7E-13 |
| Exemple 21 | 2,2E-13 | 1,4E-13 |
| Exemple 24 | 4,6E-14 | 3,5E-14 |
| Exemple 23 | 4,8E-14 | 3,8E-14 |
| Sergé 2/2 - 4 plis ref Hexcel 48302 | 1,8E-14 | 1,3E-14 |
| Exemple 25 | 9,7E-15 | 7,4E-15 |
| Exemple 26 | 2,4E-15 | 1,9E-15 |

**7.3 Mesures de facteur d'ouverture**

Les facteurs d'ouverture ont été mesurés selon la méthode suivante.

Le dispositif est constitué d'une caméra de marque SONY (modèle SSC-DC58AP), équipée d'un objectif de 10x, et d'une table lumineuse de marque Waldmann, modèle W LP3 NR,101381 230V 50HZ 2x15W. L'échantillon à mesurer est posé sur la tale lumineuse, la caméra est fixée sur une potence, et positionnée à 29cm de l'échantillon, puis la netteté est réglée.

La largeur de mesure est déterminée en fonction du matériau fibreux à analyser, à l'aide de la bague (zoom), et d'une règle : 10cm pour les matériaux fibreux ouverts (OF>2%), 1,17cm pour les matériaux fibreux peu ouverts (OF<2%).

A l'aide du diaphragme et d'un cliché témoin, la luminosité est réglée pour obtenir une valeur d'OF correspondant à celle donnée sur le cliché témoin.

Le logiciel de mesure par contraste Videomet, de la société Scion Image (Scion Corporation, USA), est utilisé. Après capture de l'image, celle-ci est traitée de la façon suivante : A l'aide d'un outil, on définit une surface maximum correspondant à l'étalonnage choisi, par exemple pour 10cm - 70 trous, et comportant un nombre de motifs entier. On sélectionne alors une surface élémentaire au sens textile du terme, c'est-à-dire une surface qui décrit la géométrie du matériau fibreux par répétition.

La lumière de la table lumineuse passant au travers des ouvertures de du matériau fibreux, l'OF en pourcentage est défini par cent auquel est soustrait la surface noire divisée par la surface élémentaire soit 100-( surface noire / surface élémentaire ).

Il est à noter que le réglage de la luminosité est important car des phénomènes de diffusion peuvent modifier la taille apparente des trous et donc de l'OF. Une luminosité intermédiaire sera retenue, de telle sorte qu'aucun phénomène de saturation ou de diffusion trop importante ne soit visible.

Les résultats obtenus sont présentés dans le **Tableau 7** ci-après:

|  | Ex. 21 | Ex. 22 | Ex. 23 | Ex. 24 | Ex. 25 |
|---|---|---|---|---|---|
| %OF moyenne | 0,14 | 0,54 | 0,08 | 0,13 | 0,96 |
| Ecart type | 0,002 | 0,15 | 0,03 | 0,05 | 0,06 |

Il est à noter que le facteur d'ouverture d'un pli perforé est assez fort (environ 1%) et est supérieur à ceux obtenus avec les empilements perforés, alors que la perméabilité du pli perforé seul est plus faible que celles des empilements. Il semble donc qu'une perforation unique réalisée lors de l'assemblage des différents plis pour former un empilement soit plus efficace en termes de perméabilité que l'empilement de matériaux intermédiaires unitaires perforés séparément. Il est, en effet, possible de concevoir que la résine fluide pénètre plus facilement *via* des canaux déjà créés à travers plusieurs épaisseurs. Quoi qu'il en soit, l'augmentation de la perméabilité du pli unitaire ($2.10^{-15}$ m$^2$ à $7.10^{-15}$ m$^2$ pour un TVF de 60%) lié à son augmentation de facteur d'ouverture (de 0 à 1%) est très important et permettra d'augmenter les épaisseurs possibles des stratifiés réalisés avec les matériaux intermédiaires selon l'invention.

### 7.4 Valeurs mécaniques

Les empilements multiaxiaux soudés conformes à l'invention ont été comparés aux mêmes multiaxiaux cousus.

Les multiaxiaux cousus de référence sont constitués de plis correspondant à l'exemple 12. Le fil de couture est un fil de polyamide 76 dTex, pas de couture chainette 5 mm x 5mm.

Les multiaxiaux soudés ont été fait avec les mêmes plis de l'exemple 12, mais soudés selon un motif carré conforme à la **Figure 4A,** mais de 50 mm x 50mm, avec un point de soudure de diamètre 8 mm, donc sans couture. L'empilement utilisé pour les essais est [(90/+45/0)/(0/-45/90)/(90/+45/0)/(90/-45/0)]$_s$. Les normes utilisées sont mentionnées dans le **Tableau 8** suivant.

Il a été utilisé les conditions particulières suivantes. En traction, des éprouvettes rectangulaires de dimensions 190 x 25 mm$^2$ ont été utilisées et un module corde pris entre 1000 et 6000 $\mu$m/m a été calculé. En Traction trouée non habitée, des éprouvettes de dimensions 150 x 25 mm$^2$ avec un perçage de diamètre 5 mm ont été utilisées. En traction trouée habitée, des éprouvettes de dimensions 150 x 25 mm$^2$ avec un perçage de diamètre 5 mm et fraisure 100° sur 2,1 mm de profondeur équipées avec un écrou 5RH8035M ST 39584 (couple serrage 0,35 daN.m) et une vis 22258 TX 050 005 ST 38260 ont été utilisées. En compression trouée non habitée, des éprouvettes de dimensions 115 x 25 mm$^2$ avec un perçage de 5 mm ont été utilisées. Le chargement s'est fait en tête et pied d'éprouvette. En compression habitée, des éprouvettes de dimensions 115 x 25 mm$^2$ avec un perçage de diamètre 5 mm et une fraisure de 100° sur 2,1 mm de profondeur, équipées avec un écrou 5RH8035M ST 39584 (couple serrage 0,35 daN.m) et une vis 22258 TX 050 005 ST 38260 ont été utilisées. Les éprouvettes ont été chargées en tête et pied.

Les essais ont été effectués en laboratoire dans des conditions normalisés d'humidité et de température (essais « sec », « température ambiante »).

**Tableau 8**

| Type de Test | Lot | Moyenne | Ecart type |
|---|---|---|---|
|  |  |  |  |
| Traction - Contrainte [MPa] Norme : EN 6035 type 2 | Cousu | **816** | 29 |
|  | Soudé | **903** | 4 |
| Traction - Module [GPa] Norme : EN 6035 type 2 avec module corde 1000-6000$\mu$m/m | Cousu | **47,87** | 0,40 |
|  | Soudé | **48,52** | 0,57 |
|  |  |  |  |
| Traction trouée - Contrainte [MPa] Norme: EN 6035 type 1 | Cousu | **489** | 21 |
|  | Soudé | **462** | 21 |
| Traction Habitée - Contrainte [MPa] Norme: EN 6035 type 1 + fraisure 100° et vis | Cousu | **397** | 15 |
|  | Soudé | **379** | 24 |

(suite)

| Type de Test | Lot | Moyenne | Ecart type |
|---|---|---|---|
| | | | |
| Compression trouée - Contrainte [MPa] Norme: EN 6036 type 1 | Cousu | **247** | 7 |
| | Soudé | **244** | 4 |
| Compression habitée - Contrainte [MPa] Norme: EN 6036 type 3 | Cousu | **302** | 14 |
| | Soudé | **291** | 16 |
| | | | |
| Traction - Module [GPa] Grossissement: x10 | Cousu | **479** | 4 |
| | Soudé | **485** | 6 |

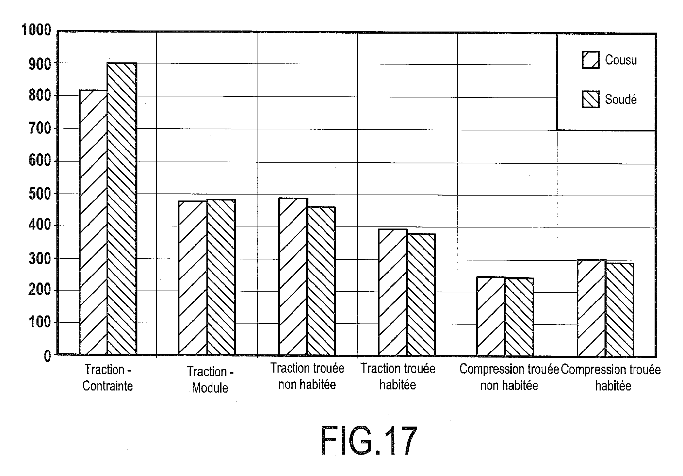

La **Figure 17** reprend l'ensemble de ces résultats.

**Revendications**

1. Nouveau matériau intermédiaire, destiné à être associé à une résine thermodurcissable pour la réalisation de pièces composites, constitué d'une nappe unidirectionnelle de fibres de carbone présentant une masse surfacique de 100 à 280 g/m$^2$, associée, sur chacune de ses faces, à un voile de fibres thermoplastiques, lesdits voiles présentant, chacun, une épaisseur de 0,5 à 50 microns, de préférence de 3 à 35 microns, le matériau intermédiaire présentant une épaisseur totale de 80 à 380 microns, de préférence de 90 à 320 microns.

2. Nouveau matériau intermédiaire, selon la revendication 1, **caractérisé en ce que** l'épaisseur du matériau intermédiaire présente une faible variabilité, notamment avec des variations d'épaisseurs n'excédant pas 20 $\mu$m en écart-type, de préférence n'excédant pas 10 $\mu$m en écart-type.

3. Nouveau matériau intermédiaire, selon la revendication 1 ou 2, **caractérisé en ce que** la nappe unidirectionnelle ne comporte aucun fil de trame venant entrelacer les fibres de carbone.

4. Nouveau matériau intermédiaire, selon l'une des revendications précédentes, **caractérisé en ce que** le matériau intermédiaire ne comporte ni tissage, ni couture, ni tricotage.

5. Nouveau matériau intermédiaire, selon l'une des revendications précédentes, **caractérisé en ce que** les voiles présents sur chacune des deux faces sont sensiblement identiques.

6. Nouveau matériau intermédiaire, selon l'une des revendications précédentes, **caractérisé en ce que** les fibres thermoplastiques sont choisies parmi les fibres de Polyamides (PA : PA6, PA12, PA11, PA6,6, PA 6,10, PA 6,12, ...), Copolyamides (CoPA), Polyamides - block ether ou ester (PEBAX, PEBA), polyphtalamide (PPA), Polyesters (Polyéthylène téréphtalate -PET-, Polybutylène téréphtalate - PBT-...), Copolyesters (CoPE), polyuréthanes thermoplastiques (TPU), polyacétales (POM...), Polyoléfines (PP, HDPE, LDPE, LLDPE....), Polyéthersulfones (PES), polysulfones (PSU...), les polyphénylènes sulfones (PPSU...), PolyétherétherCétones (PEEK), PolyétherCétone-Cétone (PEKK), Poly(Sulfure de Phénylène) (PPS), ou Polyétherimides (PEI), polyimides thermoplastiques, polymères à cristaux liquides (LCP), phenoxys, copolymères à blocs tels que les copolymères Styrène-Butadiene-Méthylméthacrylate(SBM), copolymères Méthylméthacrylate -Acrylate de Butyl-Méthylméthacrylate (MAM) ou un mélange de fibres constituées de ces matériaux thermoplastiques.

7. Nouveau matériau intermédiaire, selon l'une des revendications précédentes, **caractérisé en ce que** les voiles ont une masse surfacique comprise dans la gamme allant de 0,2 à 20 g/m$^2$.

8. Nouveau matériau intermédiaire, selon l'une des revendications précédentes, **caractérisé en ce que** l'association entre la nappe unidirectionnelle et les voiles est réalisée selon une liaison qui s'étend sur la totalité de la surface de la nappe.

9. Nouveau matériau intermédiaire, selon l'une des revendications précédentes, **caractérisé en ce qu'**il présente un facteur d'ouverture de 0 %.

10. Nouveau matériau intermédiaire, selon l'une des revendications 1 à 8, **caractérisé en ce qu'**il présente un facteur d'ouverture situé dans la gamme allant de 0,1 à 5%, de préférence dans la gamme allant de 1 à 2%, obtenu grâce à des perforations réalisées dans l'épaisseur du matériau.

11. Procédé se fabrication d'un matériau intermédiaire selon l'une des revendications 1 à 10 **caractérisé en ce qu'**une nappe unidirectionnelle de fibres de carbone présentant une masse surfacique de 100 à 280 g/m$^2$, est associée, sur chacune de ses faces, à un voile de fibres thermoplastiques, lesdits voiles présentant, chacun, une épaisseur de 0,5 à 50 microns, de préférence de 3 à 35 microns, par une étape de fusion/refroidissement des voiles, de manière à ce que le matériau intermédiaire présente une épaisseur totale de 80 à 380 microns, de préférence de 90 à 320 microns.

12. Procédé selon la revendication 11 **caractérisé en ce que** l'association est réalisée grâce à une étape de thermocompression.

13. Procédé selon la revendication 11 ou 12 **caractérisé en ce qu'**il comprend une étape de perforation du matériau intermédiaire.

14. Procédé selon la revendication 13 **caractérisé en ce que** la perforation est réalisée par pénétration d'un moyen de perforation et d'un chauffage autour du moyen de perforation entrainant un ramollissement du voile, suivi d'un refroidissement.

15. Empilement de matériaux intermédiaires selon l'une des revendications 1 à 10 **caractérisé en ce que** les matériaux intermédiaires sont solidarisés entre eux au sein de l'empilement.

16. Empilement selon la revendication 15 **caractérisé en ce que** l'empilement n'est pas solidarisé par couture, ni par tricotage, mais par une soudure réalisée par une opération de chauffage/refroidissement du voile.

17. Empilement selon la revendication 15 ou 16 **caractérisé en ce que** les matériaux intermédiaires sont liés entre eux, de façon discontinue, par chauffage/refroidissement du voile conduisant à des soudures ponctuelles.

18. Empilement selon l'une des revendications 15 à 17 **caractérisé en ce qu'**il présente différentes perforations permettant de créer des canaux de diffusion pour la résine, s'étendant, dans l'épaisseur de l'empilement, de préférence, transversalement aux matériaux intermédiaires constitutifs de l'empilement.

19. Empilement selon l'une des revendications 15 à 18 **caractérisé en ce qu'**il présente un facteur d'ouverture situé dans la gamme allant de 0,05 à 3%, de préférence dans la gamme allant de 0,1 à 0,6 %.

20. Pièce composite susceptible d'être obtenue selon un procédé de fabrication d'une pièce composite **caractérisé en ce qu'**il comporte les étapes suivantes :

   a) disposer d'un empilement de matériaux intermédiaires selon l'une des revendications 1 à 10, ou d'un empilement selon l'une des revendications 15 à 19,
   b) éventuellement solidariser l'empilement obtenu sous la forme d'une préforme,
   c) ajouter, par infusion ou injection, une résine thermodurcissable,
   d) consolider la pièce souhaitée par une étape de polymérisation/réticulation suivant un cycle défini en température et sous pression, suivi d'un refroidissement.

21. Pièce composite selon la revendication 20, **caractérisée en ce que** la résine thermodurcissable est ajoutée par infusion sous pression réduite, notamment sous une pression inférieure à la pression atmosphérique, notamment inférieure à 1 bar et de préférence comprise entre 0,1 et 1 bar.

22. Pièce composite selon la revendication 20 ou 21 **caractérisée en ce qu'**elle présente un taux volumique de fibres de 57 à 63%, de préférence de 59 à 61%.

23. Pièce composite selon la revendication 20, 21 ou 22 **caractérisée en ce qu'**elle présente une valeur de contrainte à rupture de compression après impact (CAI), mesurée selon la norme prEN 6038 sous un impact d'énergie de 25 J, supérieure à 200 MPa.

**Patentansprüche**

1. Neues Zwischenmaterial, das dazu bestimmt ist, einem warmaushärtenden Harz für die Ausbildung von Verbundteilen zugeordnet zu werden, bestehend aus einer unidirektionalen Lage aus Kohlenstofffasern, die eine flächenbezogene Masse von 100 bis 280 g/m$^2$ aufweist, welche auf jeder ihrer Seiten mit einem Vlies aus thermoplastischen Fasern verknüpft ist, wobei die Vliese jeweils eine Dicke von 0,5 bis 50 Mikrometern, vorzugsweise von 3 bis 35 Mikrometern aufweisen, wobei das Zwischenmaterial eine Gesamtdicke von 80 bis 380 Mikrometern, vorzugsweise von 90 bis 320 Mikrometern aufweist.

2. Neues Zwischenmaterial nach Anspruch 1, **dadurch gekennzeichnet, dass** die Dicke des Zwischenmaterials eine geringe Veränderlichkeit, insbesondere mit Dickenänderungen, die 20 $\mu$m als Standardabweichung nicht überschreiten, vorzugsweise 10 $\mu$m als Standardabweichung nicht überschreiten, aufweist.

3. Neues Zwischenmaterial nach Anspruch 1 oder 2, **dadurch gekennzeichnet, dass** die unidirektionale Lage keinen Schussfaden umfasst, der die Kohlenstofffasern umschlingt.

4. Neues Zwischenmaterial nach einem der vorhergehenden Ansprüche, **dadurch gekennzeichnet, dass** das Zwischenmaterial weder eine Verwebung, noch eine Naht, noch eine Verstrickung aufweist.

5. Neues Zwischenmaterial nach einem der vorhergehenden Ansprüche, **dadurch gekennzeichnet, dass** die auf jeder der beiden Seiten vorhandenen Vliese im Wesentlichen identisch sind.

6. Neues Zwischenmaterial nach einem der vorhergehenden Ansprüche, **dadurch gekennzeichnet, dass** die thermoplastischen Fasern aus den Fasern von Polyamiden (PA : PA6, PA12, PA11, PA6,6, PA 6,10, PA 6,12, ...), Copolyamiden (CoPA), Polyether- oder ester-Blockamiden (PEBAX, PEBA), Polyphthalamid (PPA), Polyestern (Polyethylenterephthalat -PET-, Polybutylenterephthalat - PBT-...), Copolyestern (CoPE), thermoplastischen Polyurethanen (TPU), Polyacetalen (POM...), Polyolefinen (PP, HDPE, LDPE, LLDPE...), Polyethersulfonen (PES), Polysulfonen (PSU...), Polyphenylensulfonen (PPSU...), Polyetheretherketonen (PEEK), Polyetherketonketon (PEKK), Polyphenylensulfid (PPS) oder Polyetherimiden (PEI), thermoplastischen Polyimiden, Flüssigkristallpolymeren (LCP), Phenoxys, Blockcopolymeren, wie Styrol-Butadien-Methylmethacrylat (SBM)-Copolymeren, Methylmethacrylat-Butylacrylat-Methylmethacrylat (MAM)-Copolymeren oder einer Mischung aus Fasern, die von diesen thermoplastischen Materialien gebildet sind, ausgewählt sind.

7. Neues Zwischenmaterial nach einem der vorhergehenden Ansprüche, **dadurch gekennzeichnet, dass** die Vliese eine flächenbezogene Masse im Bereich von 0,2 bis 20 g/m$^2$ aufweisen.

8. Neues Zwischenmaterial nach einem der vorhergehenden Ansprüche, **dadurch gekennzeichnet, dass** die Verknüpfung zwischen der unidirektionalen Lage und den Vliesen entlang einer Verbindung, die sich über die gesamte Oberfläche der Lage erstreckt, hergestellt ist.

9. Neues Zwischenmaterial nach einem der vorhergehenden Ansprüche, **dadurch gekennzeichnet, dass** es einen Öffnungsfaktor von 0 % aufweist.

10. Neues Zwischenmaterial nach einem der Ansprüche 1 bis 8, **dadurch gekennzeichnet, dass** es einen Öffnungsfaktor im Bereich von 0,1 bis 5 %, vorzugsweise im Bereich von 1 bis 2 % aufweist, der mit Hilfe von in der Dicke des Materials ausgebildeten Perforierungen erreicht wird.

11. Verfahren zur Herstellung eines Zwischenmaterials nach einem der Ansprüche 1 bis 10, **dadurch gekennzeichnet, dass** eine unidirektionale Lage aus Kohlenstofffasern, die eine flächenbezogene Masse von 100 bis 280 g/m$^2$ aufweist, auf jeder ihrer Seiten mit einem Vlies aus thermoplastischen Fasern, wobei die Vliese jeweils eine Dicke von 0,5 bis 50 Mikrometern, vorzugsweise von 3 bis 35 Mikrometern aufweisen, durch einen Schritt des Schmelzens/Abkühlens der Vliese verknüpft ist, so dass das Zwischenmaterial eine Gesamtdicke von 80 bis 380 Mikrometern, vorzugsweise von 90 bis 320 Mikrometern aufweist.

**12.** Verfahren nach Anspruch 11, **dadurch gekennzeichnet, dass** das Verknüpfen mit Hilfe eines Thermokompressionsschrittes vollzogen wird.

**13.** Verfahren nach Anspruch 11 oder 12, **dadurch gekennzeichnet, dass** es einen Schritt zum Perforieren des Zwischenmaterials umfasst.

**14.** Verfahren nach Anspruch 13, **dadurch gekennzeichnet, dass** das Perforieren durch Eindringen eines Perforierungsmittels und ein zu einer Erweichung des Vlieses führendes Erhitzen um das Perforierungsmittel herum, an das sich ein Abkühlen anschließt, vollzogen wird.

**15.** Stapel aus Zwischenmaterialien nach einem der Ansprüche 1 bis 10, **dadurch gekennzeichnet, dass** die Zwischenmaterialien innerhalb des Stapels fest untereinander verbunden sind.

**16.** Stapel nach Anspruch 15, **dadurch gekennzeichnet, dass** der Stapel nicht durch Nähen, noch durch Stricken, sondern durch eine Schweißnaht, die durch einen Vorgang des Erhitzens/Abkühlens des Vlieses hergestellt wird, fest verbunden ist.

**17.** Stapel nach Anspruch 15 oder 16, **dadurch gekennzeichnet, dass** die Zwischenmaterialien durch Erhitzen/Abkühlen des Vlieses, das zu Punkschweißungen führt, diskontinuierlich untereinander verbunden sind.

**18.** Stapel nach einem der Ansprüche 15 bis 17, **dadurch gekennzeichnet, dass** er unterschiedliche Perforierungen aufweist, die ermöglichen, Diffusionskanäle für das Harz zu erzeugen, die sich in der Dicke des Stapels vorzugsweise quer zu den den Stapel bildenden Zwischenmaterialien erstrecken.

**19.** Stapel nach einem der Ansprüche 15 bis 18, **dadurch gekennzeichnet, dass** er einen Öffnungsfaktor im Bereich von 0,05 bis 3 %, vorzugsweise im Bereich von 0,1 bis 0,6 % aufweist.

**20.** Verbundteil, das geeignet ist, nach einem Verfahren zur Herstellung eines Verbundteils erhalten zu werden, das **dadurch gekennzeichnet ist, dass** es die folgenden Schritte umfasst:

    a) Verfügen über einen Stapel aus Zwischenmaterialien nach einem der Ansprüche 1 bis 10 oder über einen Stapel nach einem der Ansprüche 15 bis 19,
    b) eventuell festes Verbinden des erhaltenen Stapels in Form eines Vorformlings,
    c) Zugeben eines warmaushärtenden Harzes durch Infusion oder Injektion,
    d) Verfestigen des gewünschten Teils durch einen Polymerisations-/Vernetzungsschritt entsprechend einem definierten Temperaturzyklus und unter Druck, an den sich ein Abkühlen anschließt.

**21.** Verbundteil nach Anspruch 20, **dadurch gekennzeichnet, dass** das warmaushärtende Harz durch Infusion unter reduziertem Druck, insbesondere unter einem Druck unterhalb des atmosphärischen Drucks, insbesondere von weniger als 1 bar und vorzugsweise zwischen 0,1 und 1 bar, zugegeben wird.

**22.** Verbundteil nach Anspruch 20 oder 21, **dadurch gekennzeichnet, dass** es einen Faservolumenanteil von 57 bis 63 %, vorzugsweise von 59 bis 61 % aufweist.

**23.** Verbundteil nach Anspruch 20, 21 oder 22, **dadurch gekennzeichnet, dass** es einen Bruchspannungswert bei Compression-After-Impact (CAI), gemessen nach der Norm prEN 6038 unter einem Aufschlag mit einer Energie von 25 J, von über 200 MPa aufweist.

## Claims

**1.** A novel intermediate material, intended to be associated with a thermosetting resin for producing composite parts, consisting of a unidirectional layer of carbon fibers having a surface mass from 100 to 280 g/m$^2$, associated on each of its faces, with a web of thermoplastic fibers, said webs each having a thickness from 0.5 to 50 microns, preferably from 3 to 35 microns, the intermediate material having a total thickness from 80 to 380 microns, preferably from 90 to 320 microns.

**2.** The novel intermediate material, according to claim 1, **characterized in that** the thickness of the intermediate material has low variability, notably with variations in thicknesses not exceeding a standard deviation of 20 $\mu$m, preferably not exceeding a standard deviation of 10 $\mu$m.

3. The novel intermediate material, according to claim 1 or 2, **characterized in that** the unidirectional layer does not include any weft yarn which will intertwine the carbon fibers.

4. The novel intermediate material, according to one of the preceding claims, **characterized in that** the intermediate material does not include any weave, or stitch or knit.

5. The novel intermediate material, according to one of the preceding claims, **characterized in that** the webs present on each of the two faces are substantially identical.

6. The novel intermediate material, according to one of the preceding claims, **characterized in that** the thermoplastic fibers are selected from fibers of polyamides (PA: PA6, PA12, PA11, PA6.6, PA6.10, PA6.12,...), copolyamides (CoPA), polyamides - block ether or ester (PEBAX, PEBA), polyphthalamide (PPA), polyesters (polyethylene terephthalate -PET-, polybutylene terephthalate -PBT-...), copolyesters (CoPE), thermoplastic polyurethanes (TPU), polyacetals (POM...), polyolefins (PP, HDPE, LDPE, LLDPE...), polyethersulfones (PES), polysulfones (PSU...), polyphenylene sulfones (PPSU...), polyetheretherketones (PEEK), polyetherketoneketone (PEKK), polyphenylene sulfide (PPS), or polyetherimides (PEI), thermoplastic polyimides, liquid crystal polymers (LCP), phenoxies, block copolymers such as styrene-butadiene-methylmethacrylate (SBM) copolymers, methylmethacrylate-butyl acrylate-methylmethacrylate (MAM) copolymers or a mixture of fibers consisting of these thermoplastic materials.

7. The novel intermediate material, according to one of the preceding claims, **characterized in that** the webs have a surface mass comprised in the range from 0.2 to 20 g/m$^2$.

8. The novel intermediate material, according to one of the preceding claims, **characterized in that** the association between the unidirectional layer and the webs is achieved according to a connection which extends over the whole of the surface of the layer.

9. The novel intermediate material, according to one of the preceding claims, **characterized in that** it has an aperture factor of 0%.

10. The novel intermediate material, according to one of claims 1 to 8, **characterized in that** it has an aperture factor located in the range from 0.1 to 5%, preferably in the range from 1 to 2%, obtained by perforations made in the thickness of the material.

11. A method for manufacturing an intermediate material according to one of claims 1 to 10, **characterized in that** a unidirectional layer of carbon fibers having a surface mass from 100 to 280 g/m$^2$, is associated, on each of its faces, with a web of thermoplastic fibers, said webs each having a thickness from 0.5 to 50 microns, preferably from 3 to 35 microns, by a step for melting/cooling the webs so that the intermediate material has a total thickness from 80 to 380 microns, preferably from 90 to 320 microns.

12. The method according to claim 11, **characterized in that** the association is achieved by a thermocompression step.

13. The method according to claim 11 or 12, **characterized in that** it comprises a step for perforation of the intermediate material.

14. The method according to claim 13, **characterized in that** the perforation is achieved by penetration of a perforation means and by heating around the perforation means causing softening of the web, followed by cooling.

15. A stack of intermediate materials according to one of claims 1 to 10, **characterized in that** the intermediate materials are secured to each other within the stack.

16. The stack according to claim 15, **characterized in that** the stack is not secured by stitching or by knitting but by welding carried out by an operation for heating/cooling the web.

17. The stack according to claim 15 or 16, **characterized in that** the intermediate materials are bound together, discontinuously by heating/cooling the web leading to point-like welds.

**18.** The stack according to one of claims 15 to 17, **characterized in that** it has different perforations giving the possibility of generating diffusion channels for the resin, extending in the thickness of the stack preferably transversely to the constitutive intermediate materials of the stack.

**19.** The stack according to one of claims 15 to 18, **characterized in that** it has an aperture factor located in the range from 0.05 to 3%, preferably in the range from 0.1 to 0.6%.

**20.** A composite part which may be obtained according to a method for manufacturing a composite part, **characterized in that** it includes the following steps:

a) have available a stack of intermediate materials according to one of claims 1 to 10, or a stack according to one of claims 15 to 19,
b) optionally secure the obtained stack as a preform,
c) add by infusion or injection, a thermosetting resin,
d) consolidate the desired part with a polymerization/cross-linking step according to a pressure-defined and temperature-defined cycle followed by cooling.

**21.** The composite part according to claim 20, **characterized in that** the thermosetting resin is added by infusion **characterized in that** under reduced pressure, notably under a pressure below atmospheric pressure, notably less than 1 bar and preferably comprised between 0.1 bars and 1 bar.

**22.** The composite part according to claim 20 or 21, **characterized in that** it has a volume level of fibers from 57 to 63%, preferably from 59 to 61%.

**23.** The composite part according to claim 20, 21 or 22, **characterized in that** it has a compressive breakage strength value after impact (CAI), measured according to the prEN 6038 under an energy impact of 25 J, of more than 200 MPa.

FIG.1

FIG.2

FIG.3A

FIG.3B

FIG.4A

FIG.4B

110

120

**FIG.5**

110

**FIG.6**

**FIG.7**

**FIG.8**

FIG.9

FIG.10

FIG.11

FIG.12

FIG.13

FIG.14

FIG.15

Taux Volumique de Fibre %

FIG.16

FIG.17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1731282 A
- EP 1125728 A
- US 628016 A
- WO 2007015706 A
- WO 2006121961 A
- US 6503856 B
- US 20060154545 A
- EP 0972102 A

**Littérature non-brevet citée dans la description**

- An Introduction to Composite Materials. **D. HULL ; T.W. CLYNE.** Cambridge Solid State Science Series. 1996
- Introduction, composite basics and road map. **S. T. PETERS.** Handbook of Composites. Chapman & Hall, 1998, 1-20
- **ROMAIN NUNEZ.** Problématique de la mesure de la perméabilité transverse de préformes fibreuses pour la fabrication de structures composites. Ecole Nationale Supérieure des Mines de Saint Etienne, 16 Octobre 2009
- **ROMAIN NUNEZ.** Problématique de la mesure de la perméabilité transverse de pré-formes fibreuses pour la fabrication de structures composites. Ecole Nationale Supérieure des Mines de Saint Etienne, 16 Octobre 2009